# EUROPEAN PATENT APPLICATION

(11) **EP 4 186 384 A1**
(43) Date of publication of application: **31.05.2023**
(21) Application number: 22209825.3
(22) Date of filing: 28.11.2022
(51) Int. Cl.: A42B 3/04

(54) **HELMET MOUNTED PROCESSING SYSTEM**

(30) Priority: 30.11.2021 US 202163284216 P
(71) Applicant: Galvion Ltd., Portsmouth NH 03801 (US)
(72) Inventor: MOORE, Christopher Martin, Bristol, BS41 8NE (GB)
(74) Representative: Elkiner, Kaya

(57) **Abstract**

A helmet system (1000) comprising a distributed processing system includes a central helmet CPU (1015) and multiple subsystem processors. The helmet CPU provides configuration settings to the subsystem processors and receives, from each of the multiple subsystem processors, data derived by the subsystem processor based on one or more sensors located in situ with the subsystem processor. The helmet CPU consolidates the derived data for determining one or more operating conditions of the helmet system and characteristics of an environment surrounding the helmet system.

## Description

### 2 Copyright Notice

A portion of the disclosure of this patent document may contain material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice shall apply to this document: Copyright GALVION LTD.

### 3 Background of the Technology

### 3.1 Field of the Technology

The present disclosure relates to sensory collection, processing, and presentation systems mounted on headgear.

### 3.2 Background

A computing device includes at least one or more processing units (CPUs) and one or more data storage or memory devices. The CPUs have internal logic circuits that perform arithmetic operations and execute machine code instructions of applications ("application code") loaded into the memory. The instructions control and communicate with input and output devices (I/O), e.g., local devices in communication with the CPU, such as memory devices, network interface devices, user interface devices, energy storage devices, sensors, transducers, image capture and display devices, transmitters, and receivers. The CPUs of the computing devices are typically configured as either microprocessors or microcontrollers. A microprocessor generally includes only the CPU in a physical fabricated package, or "chip." Computer designers connect the CPUs to external memory and I/O to make the microprocessors operational. Microcontrollers, in contrast, integrate the memory and the I/O within the same chip that houses the CPU.

The CPUs of the microcontrollers and microprocessors execute application code that extends the capabilities of the computing devices. In the microcontrollers, the application code is typically pre-loaded into the memory before startup and cannot be changed or replaced during run-time. In contrast, the CPUs of the microprocessors are typically configured to work with an operating system that enables different applications to execute at different times during run-time.

The operating system has different functions. The operating system enables application code of different applications to be loaded and executed at run-time. Specifically, the operating system loads the application code of different applications within the memory for execution by the CPU and schedules the execution of the application code by the CPU. For this reason, the operating system is said to execute "on top of" the CPU.

The sensors sense characteristics of the surroundings and provide a sensor signal that represents a characteristic of the surroundings. The raw or unprocessed sensor signal, hereinafter referred to as field data, is processed by a CPU. Sensor field data is often modified or processed by the CPU to filter out noise, to remove outlying data points and other non-useful data, and in some instances to amplify or normalize the field data. Data that has been processed to simply organize the data into a more suitable format for analysis is hereinafter referred to as processed field data and processed field data is suitable for being stored in a memory and or further processed in subsequent processing tasks. Further processing by the CPU is used to gather specific information from the processed field data. The CPU, by further processing, again modifies the processed field data in order to derive more useful information from the processed field data. The derived data can include selected features of the processed field data, e.g., derived data may isolate features of the processed field data, characterize patterns detected in the processed field data, present statistical analysis of features of the processed field data, or the like to either present desired information or to suggest further analytical tools that could be used to get further information from the derived data.

### 3.3 The Related Art

Known helmet systems include sensors, transducers, and energy storage devices attached to the helmet shell to provide services to the helmet user and to communicate with remote computer devices via the helmet system. Known helmet systems include a controller including a helmet CPU, a controller memory interfaced with the helmet CPU, a network interface device interfaced with the helmet CPU, and an energy storage device for powering the helmet systems. The helmet CPU is interfaced with various components such as in situ sensors, transducers, energy storage devices, safety equipment, and communication systems. The sensors operate to collect field data, e.g., geo-location, climate conditions, helmet inertia, in situ illumination levels, in situ sound detection, and user biosensors for tracking a user's physical condition. The transducers operate to carry out actions in response to commands from the helmet CPU and or from the user though a user interface device. Helmet transducers include illumination devices, audio speakers, image display devices, image and audio capture devices, user interface modules, energy storage devices, and transmitters.

Conventional helmet systems have a single helmet CPU configured to control all of the helmet subsystems. Recently a demand for more sophisticated helmet systems and the need for additional helmet-mounted devices impose a burden on conventional helmet systems. The burden relates to an increased demand for helmet CPU processing capacity and increased energy consumption simply by adding more devices. Additionally, the added devices add to the weight of the helmet system and increase complexity related to managing more sophisticated and data intensive helmet subsystem devices and services. The higher demand for helmet CPU processing capacity has two impact points. A first impact point is increased latency associated with CPU backlog due to the need to process more digital commands and more data traffic due to the increased number and sophistication of modern sensors and transducers being operated by a single helmet CPU. As a result, responses from the CPU are time delayed. While not all helmet systems are impacted by minor delays in responses from the helmet CPU, helmet subsystems such as image display devices and audio speakers are adversely impacted by CPU latency when screen display refresh rates and/or audio playback rates are mismatched or become longer than desired refresh rates. Delayed video and audio refresh rates are known to disorient and or distract the user. Common problems caused by latency include presenting the image frames or audio playback with less than all the data having been processed or actually stopping the image frame updates or audio playback updates until the appropriate data has been processed and made available from the helmet CPU.

CPU processing transaction frequency is rated based on clock speed usually measured in GHz. Conventional CPU clock speeds range between about 2.0 - 3.7 GHz. In a simplified example a slow CPU having a clock speed of 2.0 GHz can process 2.0 billion transactions or individual process steps per second and a fast CPU having a clock speed of 3.7 GHz can process 3.7 billion transactions or individual process steps per second. In cases where the total number of processor transactions or individual processing steps demanded by the entire helmet system is always less than 2.0 billion transactions per second, or less than 3.7 billion transactions per second, then a conventional CPU having a clock speed that can handle an expected transaction per second rate of a given helmet system without CPU latency can be selected to meet the processing demands of the helmet system without latency associated with the CPU. However, when the expected transaction per second rate of a given helmet system will likely exceed the processor transaction rate, a conventional CPU will lack the transaction rate requirement of the proposed helmet system and the CPU will cause a latency that will impact helmet system performance.

The second impact point is that some data types require far more processing transactions than others. Graphic image processing requires more processor transactions than other less data intensive sensor tasks. Graphic imaging requires more processing transactions because high fidelity audio and high-resolution color images include more data and more data processing transactions. Because of the complexity of graphic image processing, many non-helmet mounted computer systems designed for graphic image or high-fidelity audio processing include a specialized Graphic Processing Unit (GPU) in addition to a conventional CPU. The GPU or APU are configured to more rapidly process and display graphic images or audio playback. Typically, in conventional two processor computing systems a conventional CPU evaluates data streams and when the data stream includes video or other image data that requires graphic image processing the conventional CPU routes image processing tasks to the GPU and the conventional CPU carries out other nonimage processing tasks on the conventional CPU. Specialized Graphic Processing Units (GPU) process image related data up to 10 times faster than non-specialized CPUs. GPU systems are used in HDTVs, gaming computers, and in television and movie production to reduce CPU latency.

Audio data processing also requires more processor transactions than other less data intensive sensor tasks. Audio signals also require more processing transactions because high-frequency content audio signals include more data and more data processing transactions. Because of the complexity of audio signal processing, many computer systems designed for audio signal processing include a specialized Audio Processing Unit (APU) in addition to a conventional CPU. The APU is configured to more rapidly process and play audio signals and therefore the conventional CPU operating on the same computer system routes audio signal processing tasks to the GPU and carries out other non-audio processing tasks on the conventional CPU. Specialized Audio signal Processing Units (APU) process audio related data faster than non-specialized CPUs. APU systems are used in gaming computers and in musical, theatrical, sports television, and movie production.

### 4 Summary

As outlined above, conventional helmet systems operating a single helmet CPU lack sufficient processing resources to simultaneously capture continuous data streams from a plurality of helmet subsystems, e.g., sensors and transducers to process the data streams. The lack of processing resources introduces latency that at least negatively impacts displaying video images and playing audio, e.g., when parts of the video or audio signal are missing or delayed because of CPU latency. Meanwhile there is a need in the art of helmet systems to capture and display video images, and capture and play audio sounds at higher resolution and with higher fidelity.

A solution to the problem described above is present herein. The solution includes a helmet system that includes a distributed processing system that includes a helmet CPU and a subsystem processor. The subsystem processor is disposed between the helmet CPU and one or more subsystem sensors and one or more subsystem transducers. In a non-limiting exemplary operating mode, the subsystem processor receives settings from the helmet CPU, e.g., at start up. The subsystem settings comprise rules, policies, templates, and triggering events, which are stored in a subsystem memory and can be accessed by the subsystem processor to operate the subsystem in one or more operating modes.

The subsystem operating modes include receiving sensor signals as field data. The field data is routed to a pass-through processing module operating on the subsystem processor. The pass-through processing module processes the field data to provide a processed field data stream that is formatted according to requirements of one of the subsystem transducers. The processed field data is forwarded from the pass-through processing module to a corresponding subsystem transducer. In an alternative operating mode, the pass-through processing module generates processed field data that is usable by a higher level system or processor, for example a helmet CPU and may be passed to the helmet CPU in addition to or instead of a subsystem transducer. In one example the subsystem sensor is a video camera capturing an image of the surroundings and the corresponding subsystem transducer is a heads-up video display (HUD) screen. In this case the field data received by the pass-through processing module includes a steam of video image frames and the pass-through processing module modifies the video image frames according to the requirements of the HUD device by changing the resolution of the field data to match the resolution required by the heads-up display to generate processed field data for presentation on the HUD screen. In another example the subsystem sensor includes one or more inertial measurement unit (IMU) sensors as well as a video camera. In this case, the field data received by the pass-through processing module includes a stream of video image frames and a stream of IMU sensor measurement data. The pass-through processing module combines the image frames and IMU sensor measurement data to generate processed field data that includes estimates of a user's head pose and lateral movements. The subsystem processor may communicate the processed field data to the helmet CPU, which uses the estimated head pose and lateral movements to generate one or more information products, for example augmented reality (AR) icons for display on a HUD video screen.

The same field data received from the sensors is simultaneously routed to a data analysis module operating on the subsystem processor. The data analysis module uses a plurality of application programs to further process the field data. The further processing by the data analysis module may include characterizing data features and or data patterns, e.g., by filtering out noise; by analyzing data high, low, and mean amplitude values; by analyzing data frequency content; by comparing data features and patterns with subsystem settings, rules, and policies stored on the subsystem memory; and or by comparing data features and patterns with triggering event templates or the like stored on the subsystem memory. Additionally, the data analysis module includes a machine learning analysis tool that is specifically configured to identify patterns in the sensor field data generated by the subsystem sensors. Thus, the data analysis module operating on the subsystem processor is configured to derive information from sensor field data. In deriving the information from the field data, the subsystem processor modifies the field data for analysis. The data modification may include filtering, amplifying, changing the data format, or the like to generate derived data comprising modified field data that configured to be more easily analyzed and compared with predetermined data patterns. The resulting derived data is then analyzed to identify features, patterns, and various characteristics of the derived data and stores instances of the derived data in the subsystem memory for further analysis as needed.

The data analysis module then compares the derived data predetermined features, patterns, and characteristics of data sets that may indicate a threat to the user, including information that is relevant to the user's mission, such as operating characteristics of the helmet system or the like wherein the predetermined features, patterns, and characteristics of data sets are stored in the subsystem memory. If, the patterns, features, and characteristics of the derived data are found to match with the predetermined features, patterns, and characteristics of data sets stored in the subsystem memory, the subsystem processor preforms further analysis, notifies the helmet CPU that a match has been found, stores the derived data in subsystem memory, and/or uploads the derived data set to the helmet CPU (1015).

The field data may include subtle or not-so-subtle clues regarding an environment surrounding a user. For example, the field data can include audio or visual cues that an enemy attack may be imminent, e.g., when civilians leave a particular area, when multiple engine sounds are heard, or when animal sounds are heard. Many of these clues are detected by a plurality of helmet subsystems; however each clue is in isolation, e.g., visual and audio clues are sensed by different subsystems and are not reported to the helmet CPU unless the derived data from one or the other of the visual and audio subsystems is flagged as a triggering event and sent to the helmet CPU. An experienced soldier may become attuned to multiple cues and develop a sense or "feeling" that an attack may be imminent. The helmet system described herein uses triggering events installed in the settings of each helmet subsystem by the helmet CPU to alert the helmet CPU when a triggering event occurs. Specifically, each triggering event may relate to a possible threat to the user. Alternately, triggering events may relate to mission goals e.g., when the user is headed in the wrong direction, when the helmet CPU energy storage device is nearly depleted, when a subsystem sensor or transducer is failing, or the like.

To more clearly identify subtle or not-so-subtle clues regarding an environment surrounding a user, each helmet subsystem processor includes a machine learning model to analyze field data from a specific helmet subsystem sensor, e.g., a microphone. In this instance, the subsystem analysis module analyzes all or portions of the field data received from the microphone using one or more analysis techniques including a machine learning model specifically trained for microphone analysis. The machine learning model is trained to identify common sounds that the user might hear on a specific mission. The common sounds include environmental sounds likely to be picked up by external microphones on the specific mission, e.g., vehicle or aircraft sounds for various classes of vehicles and aircraft, thunder, lightning, rain, wind, voices, gunshot (for various classes of weapons), or the like, and the learning model may further determine a direction from which the sounds came. In addition, the helmet subsystem processor compares the common sounds identified by the machine model with triggering events stored in the settings of the helmet subsystem and when the identified sound is a triggering event the subsystem processor notifies the helmet CPU that a triggering event has been detected and the subsystem processor and the helmet CPU exchange information related to the triggering events, e.g., the subsystem processor sends derived data sets to the helmet CPU that includes a sound type, a time when the sound was detected, the duration of the sound, the amplitude and frequency of the sound, or the like.

In an embodiment of the disclosed technology, the helmet CPU monitors all sensory input received from helmet subsystems when triggering events occur and the helmet CPU receives a triggering event report. To more clearly identify subtle or not-so-subtle clues regarding an environment surrounding the user, the helmet CPU further includes a machine learning module configured to analyze derived data from a plurality of specific helmet subsystem sensors, e.g., a microphone, a camera, a GPS sensor, a laser threat sensor, or the like. In cases where a plurality of helmet subsystems reports a triggering event, the helmet CPU may request derived data from helmet subsystems that did not report a triggering event to include derived data over the same time period from all the subsystem sensors for analysis by the helmet CPU machine learning model.

Once received the helmet CPU may discard the triggering event if it does not seem to indicate a threat. If results of the helmet CPU machine learning model indicate one or more threats to the user, the helmet CPU generates augmented data related to a potential threat to the user which may be presented to the user as text on a heads-up display screen or as a voice alert and the helmet CPU may send commands to one or more helmet subsystems to change their operating mode, e.g., to collect more relevant data or to modify an operating mode of one or more helmet subsystems to protect the user from a safety threat.

In a particularly useful embodiment, the subsystem processors perform one or more analysis and/or formatting operations on sensor field data to generate processed or derived data sets that are useful as input data for an AI or machine learning (ML) model operated by the helmet CPU; for example to generate one or more model input vectors or features. A communication network connecting subsystems to the helmet CPU is thereby relieved of network congestion since only derived data, and not a full sequence of sensory field data, is communicated over the network. In addition, the helmet CPU is relieved of the burden of processing sensory field data to produce machine learning model input data because this processing is done by the subsystem processors. The helmet CPU (e.g., a processor running one or more AI models) operates more efficiently on the derived data or extracted features in comparison to operating on raw sensor field data. This enables the helmet CPU to process derived data received from multiple subsystems and to generate conclusions or predictions based only on derived data input more efficiently and effectively than known helmet systems, thereby enabling the helmet CPU to run a threat model and other AI models in real time.

The problem of overburdening the helmet CPU is also solved, at least in part, by subsystem processors performing autonomous re-configuration of subsystem components and functionality. In some embodiments, the helmet CPU configures each of multiple subsystems with configuration profiles that include specific actions to take in response to detected events; for example, dampen environmental sound volumes on an audio subsystem speaker when a loud noise is detected. In an exemplary embodiment, the helmet CPU generates configuration settings based on derived data received from one or more subsystems or based on output of an AI or ML model that the helmet CPU runs against the derived data. Exemplary pre-configured settings for an audio system include frequency ranges to attenuate; frequency ranges to amplify; upper and lower bounds of audio filters; and relative volumes of sound sources (hear through/outside sound volume, volume of sounds from a radio).

The helmet CPU saves configuration profiles generated for each subsystem. If a particular subsystem is damaged and replaced with a new subsystem, or a new subsystem is otherwise added to the helmet system, the helmet CPU can download a saved configuration profile to the new subsystem. A first exemplary embodiment of a helmet system incorporating the technology disclose herein includes a helmet shell, and a subsystem, attached to the helmet shell. The subsystem is configured to receive field data from at least one in-situ sensor and process the field data to detect an event trigger. The exemplary helmet system further includes a controller, attached to the helmet shell. The controller is configured to receive data from the subsystem in response to detection of the event trigger. The controller is further configured to provide a command to modify an operating mode of the subsystem in response to the data.

In some embodiments, the controller also provides augmented data to the subsystem in response to the data. The augmented data is, in some embodiments, related to a potential threat and is presented to a user via the subsystem. The subsystem is configured, in some embodiments, to provide an output to a user in response to detection of the event trigger.

Additional exemplary embodiments include a plurality of subsystems attached to the helmet shell, wherein each of the subsystems is configured to process a different type of field data and provide associated data to the controller in response to detection of an associated event trigger. The controller can provide commands to modify operating modes of one or more of the subsystems in response to the associated data and can provide associated augmented data to one or more of the subsystems in response to the associated data. In some embodiments, the associated augmented data are related to potential threats and presented to a user via the subsystems.

In some embodiments, each of the subsystems provide an output to a user in response to detection of the associated event trigger. In embodiments, the subsystems include at least two of an audio subsystem, a vision subsystem, a laser threat warning subsystem, an inertia measurement subsystem and an ambient light subsystem.

An exemplary method for operating a helmet system comprising a plurality of subsystems and a controller, includes receiving, by each of the subsystems, field data from at least one sensor in-situ with the subsystem, processing, by each of the subsystems, the field data to detect an associated event trigger, providing, by each of the subsystems, data to the controller in response to detection of the associated event trigger, and providing, by the controller, augmented data to one or more of the subsystems in response to the data. In some embodiments, the augmented data is related to a potential threat and is presented to a user via the one or more subsystems.

In some embodiments of the method, the controller also sends commands to modify operating modes of one or more of the subsystems in response to the data.

In some embodiments, the each of the subsystems processes a different type of field data and provides an output to a user in response to detection of the associated event trigger. The subsystems may include, for example, at least two of an audio subsystem, a vision subsystem, a laser threat warning subsystem, an inertia measurement subsystem and an ambient light subsystem.

A second exemplary embodiment of a helmet system incorporating the technology disclose herein includes a helmet shell, a plurality of subsystems, attached to the helmet shell, each receiving a different type of field data from at least one in-situ sensor and processing the field data to detect an associated event trigger, and a controller, attached to the helmet shell, for receiving data from the subsystems in response to detection of the associated event triggers, wherein the controller provides a command to modify an operating mode of one or more of the subsystems in response to the data. In some exemplary embodiments, the subsystems include at least two of an audio subsystem, a vision subsystem, a laser threat warning subsystem, an inertia measurement subsystem and an ambient light subsystem.

In some embodiments, the controller provides augmented data to one or more of the subsystems in response to the data. In embodiments, the augmented data are related to potential threats and presented to a user via the subsystems.

In some embodiments, each of the subsystems enables an output for a user in response to detection of the associated event trigger.

These and other aspects and advantages will become apparent when the Description below is read in conjunction with the accompanying Drawings.

### 5 Brief Description of the Drawings

The features of the present technology will best be understood from a detailed description of the technology and example embodiments thereof selected for the purposes of illustration and shown in the accompanying drawings in which:
Figure 1 is a front view of a helmet system with multiple subassemblies, the helmet system in communication with one or more external systems, according to an embodiment;
Figure 2A is a side view of an ear cup assembly of the helmet system depicted in Figure 1;
Figure 2B is a front cutaway view of a left ear cup subassembly of the helmet system depicted in Figure 1 according to an embodiment;
Figure 3 is a schematic view of a helmet communication network subsystem and a power distribution system that extends from the helmet controller 1010;
Figure 4 is a schematic view of a subassembly processor configuration including a pass-through processor for passing field data to an output transducer and an analysis module for simultaneously analyzing the field data;
Figure 5 is a schematic view of an information flow diagram illustrating information flow within a subassembly, according to embodiments;
Figure 6 is a process flowchart depicting exemplary operation of a subassembly, according to embodiments;
Figure 7 is a schematic view of a helmet CPU configuration for information flow between the helmet CPU and a plurality of subsystems;
Figure 8 is a process flowchart depicting exemplary operation of a helmet CPU, according to embodiments;
Figure 9 is a process flowchart depicting exemplary analysis processing of a helmet CPU, according to the subject technology;
Figure 10 is an information flow diagram depicting exemplary data exchange and processing between subsystem components of a helmet system between the subsystem components and a helmet processor and between an external system and the helmet processor, according to embodiments;
Figure 11 is a schematic view of an odometry system that includes an odometry subsystem and a helmet controller;
Figure 12 is a side view of a helmet system including a modular sensor pod;
Figure 13 is a schematic view of a soldier communication network.

### 6 Description of Some Embodiments of the Subject technology

### 6.1 Definitions

The following definitions are used throughout, unless specifically indicated otherwise:

| **TERM** | **DEFINITION** |
|---|---|
| Data or dataset | A set of quantitative values. |
| Datum | A single value. |
| Field data | Raw data measured, collected, or reported in an uncontrolled environment, e.g., collected by an in situ sensor. |
| Processed field data | Field data that is formatted into a processed field data stream according to requirements of one of the subsystem transducers or according to requirements of a higher level system, for example a helmet CPU. |
| Derived data | Data that is the output of calculations or analysis and other manipulations of field data or other data that cannot be reversed back to the original data. |
| Meta data | Data about the data: e.g., a time or date the data was captured, a location where the data was captured, device settings used to capture the data, a user that captured the data, a file name or memory location for finding the data. |
| External data | Raw data that was collected by a device that is outside the helmet's network, such as external devices 1035, and sent to the augmented data module 5560 for processing. |
| Augmented data | Processed field data received by a helmet CPU from external devices or generated internally by the helmet CPU and sent from the augmented data module 5560 to the data combination module 4400. |
| Augmented field data | The data produced when processed field data is combined with augmented data. |
| Data visualization | Graphs, tables, images. |
| Pixel | The smallest single component of a digital image; a single photosensor of a digital camera sensor array; a single photo emitter of a photo display device. |
| In situ | A Latin phrase that translates literally to "on site" or "in position." It can mean "locally," "on site," "on the premises," or "in place" to describe where an event takes place. |

### 6.2 Item Number List

The following item numbers are used throughout, unless specifically indicated otherwise.

| **#** | **DESCRIPTION** | **#** | **DESCRIPTION** |
|---|---|---|---|
| 1000 | Helmet system | 1470 | Sensor pod interface |
| 1001 | Helmet system | 1475 | Sensor pod cable |
| 1005 | Helmet shell | 1480 | Sensor pod |
| 1010 | Helmet controller | 1505 | Non-helmet subsystem processor |
| 1012 | Helmet controller | 1510 | Non-helmet subsystem sensors |
| 1015 | Helmet CPU | 1515 | Non-helmet subsystem transducers |
| 1020 | Controller memory | 1517 | Non-helmet hub |
| 1025 | Central network interface device | 1520 | Non-helmet weapon system |
| 1030 | WAN Network | 1525 | Non-helmet drone control system |
| 1035 | External network devices | 1600 | Torso hub |
| 1037 | Data lake data store | 1610 | EUD |
| 1040 | Energy source | 1620 | Radio |
| 1045 | Charging device port | 1630 | Power sources |
| 1050 | First earcup arm | | |
| 1055 | Communication network | 1710 | Soldier |
| 1060 | First helmet attachment point | 1712 | Soldier |
| 1062 | First earcup attachment point | 1714 | Soldier |
| 1065 | Second earcup arm | 1716 | Soldier |
| 1070 | Second helmet attachment point | 1718 | Soldier |
| 1072 | Second earcup attachment point | | |
| 1080 | HUD transducer | 1800 | Tank |
| 1085 | HUD transducer | | |
| 1090 | Mechanical support structure | 4000 | Subsystem |
| 1095 | Mechanical support structure | 4100 | Analysis module |
| 1100 | LTWS subsystem | 4110 | Comparison module |
| 1105 | LTWS processor | 4120 | ML module |
| 1110 | LTWS sensor | 4140 | Derived data module |
| 1115 | LTWS transducer | 4200 | Pass through processing module |
| 1130 | Vision subsystem | 4210 | Pass through data preparation module |
| 1135 | Vision processor | 4220 | Head tracking module |
| 1140 | Vision sensor | 4300 | Control module |
| 1145 | Vision sensor | 4400 | Data combination module |
| 1150 | Vision sensor | 4500 | Data store |
| 1155 | Display screen | 4610 | Input interface |
| 1160 | Display screen | 4620 | Output interface |
| 1200 | IMU subsystem | 4630 | Network interface programs |
| 1205 | IMU processor | 4640 | Network interface device |
| 1210 | IMU sensors | 4710 | Sensor(s) |
| 1215 | IMU transducers | 4712 | Camera |
| 1230 | Ambient light subsystem | 4714 | IMU(s) |
| 1235 | Ambient light processor | 4720 | Output transducer(s) |
| 1240 | Ambient light sensors | 4810 | Processor(s) |
| 1245 | Ambient light transducers | 4900 | Operating System |
| 1260 | Biometric subsystem | | |
| 1265 | Biometric processor | 5230 | Configuration and settings DB |
| 1270 | Biometric sensors | 5550 | External data DB |
| 1275 | Biometric transducers | 5560 | Augmented data module |
| | | 5570 | Subsystem configuration module |
| 1300 | Touchless control subsystem | 5660 | Network interface programs |
| 1305 | Touchless control processor | 5710 | External system notification module |
| 1310 | Touchless control sensors | 5850 | Derived data DB |
| 1315 | Touchless control transducers | 5860 | Data prep module |
| 1325 | | 5865 | SLAM data prep module |
| 1330 | First earcup subsystem | 5880 | ML model DB |
| 1335 | First earcup processor | 5900 | Analysis module |
| 1340 | First earcup sensors | 5910 | ML model |
| 1345 | First earcup transducer | 5920 | Algorithm |
| | | 5925 | Object finding ML model |
| 1360 | Second earcup subsystem | 5927 | Map reading AI model |
| 1365 | Second earcup processor | 5950 | Analysis output DB |
| 1370 | Second earcup sensors/external microphones | 5970 | Operating System (OS) |
| 1372 | Second earcup sensors/internal microphone | 5990 | SLAM module |
| 1375 | Second earcup transducer/speaker | | |
| 1380 | | 6100 | Local dedicated analysis processing |
| 1390 | Earcup enclosure assembly | 6200 | Pass-through processing |
| 1395 | Earcup enclosure wall | 6230 | Configuration and settings |
| 1400 | Earcup rim portion | 6400 | Combine augmented data and processed field data |
| 1405 | Earcup attachment point interface | 6510 | Derived data |
| 1410 | Network interface device | 6520 | Settings |
| 1415 | Earcup sound chamber | 6530 | Augmented data |
| 1440 | System | | |
| 1450 | Odometry subsystem | | |

### 6.3 Detailed description

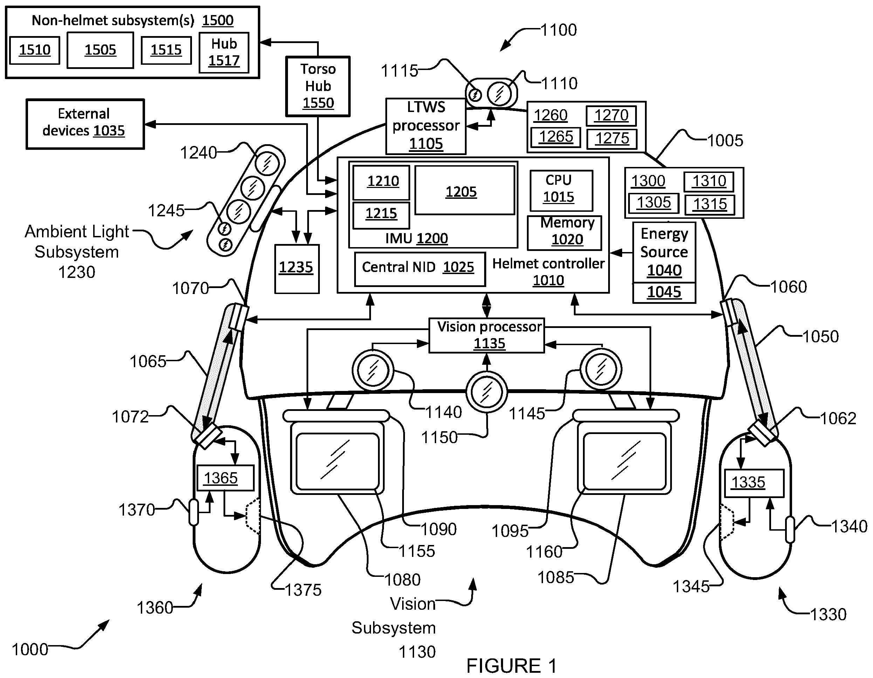

Figure 1 shows a schematic representation of a helmet system 1000 worn on the head of a user. The helmet system 1000 includes a helmet shell 1005 configured to protect the user wearing the helmet system from a head injury; for example by blunt trauma, ballistic impact, or both. The helmet system 1000 includes a helmet controller 1010. The helmet controller 1010 is attached the helmet shell 1005 on an inside surface of the helmet shell, on an outside surface of the helmet shell, or between the inside surface of the helmet shell and the outside surface of the helmet shell and may be enclosed within a helmet controller enclosure, not shown. In a non-limiting exemplary embodiment, the helmet controller 1010 is attachable to or removable from a rear external surface of the helmet shell.

The helmet controller 1010 at least comprises a helmet CPU 1015, a controller memory device 1020, interfaced with the helmet CPU, and a central network interface device 1025 interfaced with the helmet CPU. The helmet controller 1010 is powered by an energy source 1040 electrically interfaced with helmet controller 1010. The energy source 1040 is attached to the helmet shell 1005 on an inside surface of the helmet shell, on an outside surface of the helmet shell, or between the inside surface of the helmet shell and the outside surface of the helmet shell and may be enclosed within a helmet controller enclosure, not shown. The energy source 1040 preferably includes a rechargeable DC battery and may include a plurality of rechargeable batteries connected in series or in parallel collectively operating as an energy storage device in communication with the CPU 1015. In some embodiments, the energy source 1040 includes a smart rechargeable battery. \In other embodiments, the energy sources 1040 includes one or more batteries and a charge controller that is operable to generate and share information regarding an operating state of the one or more batteries. The energy source is in communication with the helmet CPU 1015 which monitors various aspects of the energy source, e.g., State of Charge (SoC), State of Health, operating voltage range, instantaneous voltage, temperature, total current or power output status, and may derive other information from the monitored aspects, e.g., remaining time before the energy source will be fully discharged. Preferably the helmet system includes a battery charging device port 1045 electrically interfaced with the energy source 1040 for charging the rechargeable battery. In some embodiments, the battery charging device port 1045 includes an electro-mechanical interface for mounting a supplemental power unit (not shown) comprising one or more additional energy sources (not shown) onto the helmet shell 1005. Other energy sources, e.g., nonrechargeable DC batteries, charged capacitors, solar voltaic modules, or the like, attached to the helmet shell, are usable as an energy source without deviating from the present technology. An exemplary energy source enclosure that is attachable to or detachable from a helmet shell is disclosed in US 10165817, assigned to GALVION Ltd, entitled "Battery pack and helmet mounting arrangement," which is incorporated by reference herein in its entirety. An alternate energy source or power generating device may be worn by the user or may become accessible to the user, e.g., from a vehicle or other external energy or power generating system, to power the helmet system or recharge the energy source 1040 through the charging device port 1045.

The helmet system 1000 includes a plurality of helmet subsystems. Each helmet subsystem includes one or more in-situ sensors and one or more in-situ transducers. Each helmet subsystem includes a subsystem processor and a subsystem transient or persistent memory in communication with the subsystem processor. Each subsystem processor and subsystem transient or persistent memory operates a different subsystem schema configured to power and operate the in-situ sensors and to power and operate the in-situ transducers corresponding with the helmet subsystem.

Each subsystem schema is operated according to one or more settings related to powering and operating the in-situ sensors and related to powering and operating the in-situ transducers corresponding with the helmet subsystem. The settings of each subsystem schema are received from the helmet CPU and stored in the subsystem transient or persistent memory. The settings of each subsystem schema can be modified by the helmet CPU, e.g., by replacing existing settings stored in the subsystem transient or persistent memory with the modified settings or by the helmet CPU commanding the subsystem schema to use different settings stored in the subsystem transient or persistent memory.

The settings of each helmet subsystem are specific to the configuration of the helmet subsystem. The settings of each helmet subsystem may be specific to the role of the user wearing helmet system, e.g., the helmet subsystem settings for a helmet system worn by a radio operator may be different from the helmet subsystem settings of a helmet system worn by an artillery system operator or may be different from the helmet subsystem settings of a helmet system worn by a medical service provider. Similarly, settings of each helmet subsystem may be specific to the local environment, e.g., the helmet system worn by the same user in daylight may be different than the settings of each helmet subsystem when the user wears the helmet system in darkness.

In non-limiting examples, each subsystem processor is configured to receive raw field data from one or more in-situ sensors corresponding therewith. The raw field data may comprise an electrical signal, e.g., comprising signal amplitude vs. time, signal amplitude vs. pixel position, or a digital data stream representing digitized electrical signal values when the sensor outputs digital data in response to sensor excitation. When the field information is an electrical signal, the subsystem processor converts the electrical signal to a digital data stream. The digital data stream of sensor information received directly from an in-situ sensor or converted to digital values from the electrical signal received from the in-situ sensor is hereinafter referred to as field data. The subsystem schema is configured to evaluate the field data according to one or more subsystem settings of the subsystem schema.

Each subsystem processor communicates with the helmet CPU 1015 either over the central network interface device 1025 or over a direct communication channel disposed between the helmet CPU and the subsystem processor. Each helmet subsystem receives input power from the energy source 1040 and/or from an energy source comprising the helmet subsystem. A subsystem processor is in communication with the helmet energy source 1040, either over the helmet CPU 1015 or over central network interface device 1025 to request power as needed. Alternately one or more helmet subsystems may include a subsystem energy source operating independently of the helmet energy source 1040.

Each subsystem processor is configured to send a command or to send processed data to a corresponding transducers operated by the subsystem. A command may simply actuate a feature of the transducer, e.g., to start or to stop operating or to change a mode of operation. Sending field data or processed data may comprise sending a digital data stream of image pixel values arranged as video frames, sending a digital data stream of speaker driver values for driving an audio speaker, or may comprise sending a digital data stream of light illumination values for driving an illumination device. In many applications the amplitude values are voltage values.

Each in-situ sensor and each in-situ transducer is in communication with and controllable by the subsystem processor corresponding therewith. Each of the helmet subsystems includes a subsystem processor and a corresponding subsystem transient and/or persistent memory device in communication with subsystem processor. Each subsystem processor is in communication with the helmet CPU 1015. Each helmet subsystem includes one or more in-situ sensors and one or more in-situ transducers either directly attached to the helmet shell 1005 or indirectly attached the helmet shell 1005.

Helmet subsystems that are directly attached to the helmet shell are directly secured to the helmet shell 1005 at a helmet attachment point formed by the helmet shell or a mounting pad attached to the helmet shell. Individual in-situ sensors and in-situ transducers of the same helmet subsystem can also be directly attached to helmet shell 1005 at a plurality of different locations at a plurality of different helmet attachment points. Helmet subsystems that are indirectly attached to the helmet shell are secured to a mechanical support structure that extends from the helmet shell 1005. The mechanical support structure is attached to the helmet shell 1005 at a first end thereof and the in-situ sensor or in-situ transducer is attached to a second end or to a mounting point formed on the mechanical support structure. An entire helmet subsystem can indirectly be attached to the helmet shell when mounted to a mechanical support structure that extends from the helmet shell 1005.

In embodiments, a mechanical support structure is configured to support at least one element of a helmet subsystem, or an entire helmet subsystem attached thereto in a plurality of different positions and or orientations, e.g., wherein the mechanical support structure or a portion of the mechanical support structure is movable or rotatable with respect to a fixed end of the mechanical support structure to with respect to the helmet shell, or both. Preferably the mechanical support structure is adjustable by the user to move or rotate the element of the helmet subsystem or an entire helmet subsystem that is supported thereby between an operating position and a non-operating position of the helmet subsystem.

### 6.3.1 Earcup subassembly mechanical support

In an exemplary embodiment shown in Fig. 1, a schematic representation of a mechanical support structure supporting a first earcup arm 1050 supporting a first earcup subsystem 1330 and a second earcup arm 1065 supporting a second earcup subsystem 1360. The first earcup arm 1050 attaches to an outside surface of the helmet shell 1005 at a first helmet attachment point 1060. The first earcup subsystem 1330 attaches to the first ear cup arm 1050 at a first earcup attachment point 1062. One or both of the first helmet attachment point 1060 and the first earcup attachment point 1062 are rotatable attachments. Rotation of the first earcup arm 1050 with respect to helmet shell is provided by the first helmet attachment point 1060. Rotation of the first earcup subsystem 1330 with respect to first earcup arm is provided by the first earcup attachment point 1062. The rotatable attachment points 1060 and 1062 allow the user to angularly reposition the first earcup subsystem 1330, e.g., between an operating position and a non-operating position by rotation.

The second earcup arm 1065 attaches to an outside surface of the helmet shell 1005 at a second helmet attachment point 1070. The second earcup subsystem 1360 attaches to the second ear cup arm 1065 at a second earcup attachment point 1072. One or both of the second helmet attachment point 1070 and the second earcup attachment point 1072 are rotatable attachments. Rotation of the second earcup arm 1065 with respect to helmet shell is provided by the second helmet attachment point 1070. Rotation of the second earcup subsystem 1330 with respect to second earcup arm is provided by the second earcup attachment point 1072. The rotatable attachment points 1070 and 1072 allow the user to angularly reposition the second earcup subsystem 1330, e.g., between an operating position and a non-operating position by rotation.

Although particular earcup attachment arrangements are shown, embodiments can include any known attachment means for securing an earcup or earpiece to a helmet or helmet shell without departing from the inventive concepts disclosed herein. For example, one or both of the first and second earcup subsystems 1330, 1360 may be secured directly to the helmet, thereby eliminating the need for attachment using earcup arms 1050 and 1065. In some embodiments, one or more earcup subsystems 1330, 1360 can be attached to an inner surface of a helmet or may be wearable on a user's head independently of attachment of the earcup subsystem to a helmet. Exemplary mechanical support structures associated with attaching an earcup subsystem to an inner surface of a helmet and for wearing earcup subsystems independently of attachment to a helmet are described in US 10779604B2, assigned to GALVION Ltd, entitled "Earphone and helmet with earphone," which is incorporated by reference herein in its entirety.

### 6.3.2 HUD transducer mechanical support

The helmet system includes one or two Heads up Display (HUD) transducers 1080 and 1085 each indirectly attached to the helmet shell 1005 by a first HUD mechanical support structure 1090 and a second HUD mechanical support structure 1095. Each HUD mechanical support structure includes a helmet attachment end directly attached to the helmet shell 1005 and one or more subsystem attachment points provided by the mechanical support structure to support one of the HUD modules 1080 and 1085. Each HUD 1080 and 1085 is a transparent viewing screen (1155, 1160) that allows the user to view images being displayed on the transparent viewing screen by a vision subsystem. The transparent viewing screen also allows the user to shift the gaze to look beyond the transparent viewing screen to see their surroundings. The HUD transducers receive power from the energy source 1040.

The first HUD mechanical support structure 1090 and the second HUD mechanical support structure 1095 are substantially identical and configured to allow the user to position the corresponding HUD in the field of view of one eye of the user, e.g., at an operating position, and to move the HUD to a non-operating position or to detach the HUD modules 1080 and 1085 from the corresponding mechanical support structure 1090, 1095 to be stowed when not in use. Exemplary HUD mechanical support structures 1090 and 1095 are disclosed in US patent application publication US20210247618A1, assigned to GALVION Ltd, entitled "Rugged integrated helmet vision system" and in US:9943127B2, assigned to GALVION Ltd, entitled "Adjustable connector for a helmet accessory," each of which is incorporated herein in its entirety. Other exemplary indirect mechanical interfaces used to indirectly attach a helmet subsystem or helmet sensor or transducer to a helmet shell are described in US:9433252B2, assigned to GALVION Ltd. entitled "Helmet accessory attachment system" and in US9414633B2, assigned to GALVION Ltd. entitled "Helmet mounting system," both of which are incorporated herein by reference.

### 6.3.3 Laser threat warning system support

Laser Threat Warning System (LTWS) subsystem 1100 includes LTWS processor 1105 in communication with a local LTWS memory, with the helmet CPU 1015, and in communication with one or more LTWS sensors 1110, and with one or more LTWS output transducers 1115. The LTWS subsystem receives power from the energy source 1040.

The LTWS sensors 1110 are configured to detect laser radiation over a range of visible or intermediate wavelengths, e.g., 380-740 nm, and over one or more ranges of non-visible wavelengths, e.g., ultraviolet (UV), e.g., 10-400 nm, and infrared (IR) e.g., 700 nm to 1 mm. The LTWS sensors 1110 may comprise one or more photo detector devices, e.g., a semiconductor photodetector arrays, i.e., an infrared camera, an array of avalanche photodiodes (APD), a photoconductivity device, a photo-electromagnetic device, and/or a photo-diffusion device configured to detect photo energy over the range of wavelengths identified.

At least one LTWS output transducers 1115 is configured to emit photo radiation. LTWS output transducers 1115 may include a Light Emitting Diode (LED), an array of LEDs, and or one or more other light emitting devices each emitting illumination at a selected wavelength or range of wavelengths at visible and non-visible wavelength ranges or colors. The illumination emitted by the LTWS output transducers 1115 is emitted in various patterns for various reasons such as to provide an alert signal which can be at visible or at non-visible wavelength. LTWS output transducers 1115, e.g., emitting non-visible illumination, may include a laser rangefinder; a laser dazzler, used to blind laser targeting probes; a laser target designator, used to illuminate a target with non-visible light; a laser beam rider, used for missile guidance; a laser IR illuminator, used for night vision; or the like.

The LTWS processor 1105 receives a photo detection signal from the LTWS sensors 1110. , The photo detection signals typically represent a detection of photo energy by the photosensor or photosensors, e.g., an indication that laser radiation has impinged on a LTWS sensor 1110, and can include information indicative of one or more properties of the laser radiation; for example, one or more of a wavelength, color, or amplitude value. The photo detection signals also can represent an image, e.g., a stream of image frames wherein each pixel of the image frame comprises a signal amplitude value, a position of the pixel within the image frame, and a time that the image frame was sent to the LTWS subsystem processor. The photo detection signals can represent a continuous or intermittent stream of signal amplitude values vs time, e.g., with a sampling rate of 1 kilohertz to 1 hertz.

The LTWS processor 1105 is configured to receive photo detection signals both as analog electrical signals and as digital signals and to modify the received signal, e.g., to convert analog electrical signals to a digital signal. The digital photo detection signal is herein referred to as field data. LTWS processor 1105 is configured to modify the field data to remove outlying amplitude values, to filter noise, to reformat the field data, e.g., to normalize the signal amplitude values as required to further process the field data into more useful LTWS processed field data for pass through to a LTWS transducer.

The LTWS processor 1105 further includes an analysis module. The subsystem analysis module analyzes all or portions of the field data received from the LTWS sensors using one or more analysis techniques including a machine learning model specifically trained for LTWS sensor analysis. The machine learning model is trained to identify common LTWS sensor characteristics and configured to derive information from field data received from LTWS sensors and to make a determination whether a laser threat has been detected or not. Preferably the LTWS machine learning model is capable of identifying an illumination source type, a location of the illumination source, patterns of illumination, a plurality of illumination sources, movement of the illumination source, or the like. Preferably the LTWS processor 1105 is configured to generate data visualization tools, e.g., graphs, tables, and or images that can be displayed on a display device, stored by the LTWS memory, or uploaded to the helmet processor 1015.

When a laser threat is detected by the LTWS processor 1105 the LTWS processer reports the laser threat to the helmet CPU 1015. This occurs when the LTWS processer identifies characteristics of the photo detection signal that match predetermined laser threat criteria, laser threat rules, or laser threat policies stored on the LTWS memory. When a laser threat is detected, the LTWS processer will carry out laser threat rules or laser threat policies stored on the LTWS memory. The laser threat rules and policies may include, selecting derived data associated with the LTWS subsystem to send to the helmet CPU 1015. The derived data may include characteristics of a detected laser threat, for example a direction from which laser radiation was received by one or more LTWS sensors 1110 and one or more characteristics of the received laser radiation, e.g., wavelength, code, pulse type, signal strength, detection is splash or direct, and approximate azimuth and elevation of the laser source. The laser threat rules and policies preferably include specifications for the types and formats of derived data that the LTWS processor should send to the helmet CPU 1015 in response to a detected laser threat.

The laser threat rules and policies may further include changing settings of the LTWS processor 1105 to a threat detection mode; activating or otherwise sending commands to one or more of the LTWS output transducers 1115 to emit photo radiation, e.g., an alert pattern; to activate a laser dazzler; to activate a laser target designator; or the LTWS processor 1105 may wait for a command from the helmet CPU 1015 before sending commands to one or more of the LTWS output transducers 1115.

### 6.3.4 Helmet vision subsystem

The helmet system 1000 includes a vision subsystem 1130. The vision subsystem includes a vision processor 1135 in communication with: a local vision memory; with the helmet CPU 1015; with one or more vision sensors 1140, 1145, and 1150; and with one or more vision transducers, for example HUDs 1080, 1085. The vision subsystem receives power from the energy source 1040.

A non-limiting exemplary vision subsystem embodiment, shown in Fig 1 includes three vision sensors 1140, 1145, 1150 each mounted to a front portion of the helmet shell 1005 just above the eyes of the helmet user and configured to capture video and or still images of the helmet users' surroundings. Other vision sensors can be mounted to the back and sides of the helmet shell 1005 as required to provide the user additional awareness of their surroundings. At least one vision sensor 1140, 1145, 1150, e.g., the center sensor 1145 is configured differently as compared to the other two vision sensors. In an example two vision sensors 1140 and 1145 capture images over visible or intermediate wavelengths, e.g., 380-740 nm and the third sensor 1150 captures images over non-visible wavelengths, e.g., ultraviolet (UV), e.g., 10-400 nm, and infrared (IR) e.g., 700 nm to 1 mm. In a further example two of the vision sensors, e.g., 1140 and 1145 are configured for image capture in daylight conditions over the visible or intermediate wavelengths and the other or the vision sensors, e.g., 1150, is configured for image capture in low light conditions over the visible or intermediate wavelengths. In this case the third vision sensor 1150 is configured for image capture in darkness over the non-visible wavelengths.

Each vision subsystem sensor 1140, 1145, and 1150 comprises one or more photo detector devices, e.g., a semiconductor photodetector array, wherein each photodetector in the photodetector array is configured to detect photo energy over a wavelength response range with a given photosensitivity range. Each photo detector element, or pixel, of a given photodetector array generates a photo detection signal value representative of an instantaneous radiant flux (e.g., measured in watts or Joules per second) that is sensed by the photodetector or pixel. The photosensitivity range of a photodetector extends between a minimum photo energy or radiant flux required to generate a response signal and a maximum photo energy or radiant flux that can be sensed, e.g., when further increases in photo energy does not generate a corresponding increase response signal value. The wavelength response range of a photodetector extends between a first minimum wavelength of the photo energy that can generate a response signal, a peak wavelength of the photo energy that generates a maximum response signal value in response thereto, and second minimum wavelength of the photo energy that can generate a response signal.

In a non-limiting operating mode, the vision subsystem sensors 1140, 1145, 1150, are each configured to periodically capture the photo detection signal value of each photodetector element or pixel of the photodetector array and to forward a stream of photo detection signal values, e.g., an image frame, to the vision processor 1135. A preferred periodic capture rate or frame rate sends an image frame comprising a pixel signal value for each photodetector in the photodetector array between 20 and 60 times per second, i.e., at a rate of 20 to 60 frames/sec. Selection of the frame rate depends on characteristics of the vision sensors 1140, 1145, 1150, e.g., the total number of pixels; characteristics of the vision processor 1130, e.g., processing speed or transaction rate; and characteristics of the vision transducers HUDs 1080, 1085, e.g., the display resolutions and refresh rates thereof.

The photo detection signals comprise a stream of signal amplitude vs time values or a stream of signal amplitude vs pixel position values. Other information is included in the stream of signal such as, a vision sensor ID, the clock time of the capture start and end, the settings of the vision sensor, and other relevant information received from the vision sensor. Preferably, the vision processor 1135 receives digital photo detection signals from each vision sensor where the received digital photo detection signals comprise field data corresponding to the surroundings of the helmet system user.

Each vision sensor 1140, 1145, and 1150 may comprise self-governing or autonomous image capture devices including an image capture processor incorporated therein. The image capture processor, not shown, captures and processes pixel signal values for each photodetector in the photodetector array corresponding with the vison sensor. The image capture processor may further convert electrical photosensor values to digital photosensor or pixel values and package digital signal values into a frame for delivery to the vision processor 1135. In examples, the image capture processor may provide auto focus and auto exposure settings to ensure that images captured by the corresponding vision sensor 1140, 1145, 1150 are in focus and captured with an optimum exposure level. The image capture device processor may further preprocess image capture signals to deliver a digital image signal, e.g., field data, directly to the vision subsystem 1130. The vision sensors 1140, 1145, and 1150 may comprise binocular silicon-based transducers, similar to smart phone image sensors.

The vision processor 1135 is configured to receive a digital signal, e.g., captured field data, from any one of the vision sensors 1140, 1145, 1150. A vision subsystem memory includes a plurality of persistent vision subsystem operating programs, operating modes, settings, rules, policies, or the like, that correspond with routine operation of the vision subsystem 1130 by the vision processor 1135. The persistent programs are loaded onto the vision processor 1135 during a helmet system startup. The persistent programs include programs for requesting power from the energy source 1040; for establishing network communication links with the vision sensors 1140, 1145, 1150, with the helmet CPU 1015, and with the HUD transducers 1080 and 1085, with receiving field data from the vision sensors, and with routing data to external devices. The vision subsystem memory also includes a plurality of transient vision subsystem operating programs, operating modes, settings, rules, policies, or the like, that correspond with non-routine operation of the vision subsystem 1130 by the vision processor 1135.

The transient programs are loaded onto the vision subsystem memory by the helmet CPU 1015. The transient vision subsystem operating programs, operating modes, settings, rules, and policies may be mission-specific, e.g., when the mission duration is expected to only include daylight hours, a transient vision subsystem operating mode can be configured to not utilize the third vision sensor 1150 for image capture because the third vision sensor 1150 is configured for image capture in darkness over non-visible wavelengths. In this instance, the vision sensor 1150 and any image capture activity related to the vision sensor 1150 can be blocked by a transient vision subsystem operating mode, rule, or policy with a resulting reduction in energy usage by the vision sensor 1150 and by the vision processor 1135 and possibly the helmet CPU 1015 because the vision sensor does not capture field data for analysis.

The triggering events are loaded onto the vision subsystem memory by the helmet CPU 1015. The triggering events, when recognized by the vision processor 1135 in a vision-derived data set, triggers one or more predefined reactions by the vision processor 1135. The reactions may include characterizing the triggering event, e.g., identifying an event type, the clock start and end time of the triggering event; storing field data, and in particular a selected portion of field data, e.g. an image frame corresponding to the triggering event; generating derived data corresponding with the triggering event; analyzing the stored field and derived data corresponding with the triggering event; notifying the helmet CPU that the triggering event has occurred; and communicating one or more of the stored field data and the derived data to the helmet CPU.

When processing vision subsystem field data the vision processor 1135 receives field data from one vision sensor 1140, 1145, 1150 and directs the field data to a pass-through processing module. The pass-through module modifies the field data by filtering, cleaning, and reformatting the field data to generate processed field data. The filtering and cleaning steps include removing outlying amplitude values, filtering out image noise, and reformatting the field data e.g., by normalizing the field data by modifying the data format to match the format used by a display device, or the like. The processed field data is then forwarded to a corresponding subsystem transducer to display the image frames.

The vision processor 1135 simultaneously directs the field data to a subsystem analysis module operating on the vision processor. The subsystem analysis module analyzes all or portions of the field data received from one vision sensor using one or more analysis techniques including a machine learning model specifically trained for vision sensor analysis. The machine learning model is trained to identify common vision sensor characteristics and configured to derive information from field data received from vision sensors and to make a determination whether a triggering event or other threat has been detected or not.

The vision subsystem embodiment includes one or more vision output transducers configured to display a video and or a still image received from at least one of the vision sensors 1140, 1145, 1150. In the present example the vision output transducers include the two HUD transducers 1080 and 1085, shown in Figure 1. HUD transducer 1080 is indirectly attached to the helmet shell 1005 by a first HUD mechanical support structure 1090 and HUD transducer 1085 is indirectly attached to the helmet shell 1005 by a second HUD mechanical support structure 1095. In operation one or both HUD transducers 1080 and 1085 is interfaced with the vision processor 1135 to receive image data derived from field data received from one or more of the vision sensors 1140, 1145, or 1150.

Each HUD includes a transparent display screen 1155, 1160 positioned in the field of view of helmet system 1000 user. In an exemplary embodiment, the HUDs 1080 and 1085 each include an optical waveguide for displaying visual elements, e.g., black and white or color still or video images, text, or graphics that is viewable by the user on one or both of the display screens 1155, 1160. Additionally, the visual elements displayed on each display screen 1155, 1160 may provide stereopsis, e.g., when each display screens 1155, 1160 displays image frames captured by a different one of the vision sensors 1140, 1145, or 1150, the resulting image provides depth perception to enhance the user's view of their surroundings.

Each HUD 1080, 1085 receives processed field data comprising digital video signals from the vision processor 1135 and displays images corresponding to the received digital video signals. The displayed images can include time-varying display patterns e.g., video images, text images, graphic images, in black and white or in color. In an alternative embodiment, one output transducer includes a single HUD with a display screen positioned in the field of view of one eye of the user. In a further alternative embodiment, one output transducer includes a single HUD or visor with a display screen positioned in the field of view of both eyes of a user configured to provide output to both eyes of the user. Embodiments of vision subsystem 1130 can include more or fewer vision sensors and more or fewer vision output transducers. A small three-color image displayed on a HUD display having 100 vertical pixels and 100 horizontal pixels with frame rate of 50 frames per second requires a processor transaction rate of 25Kbits/second.

In a preferred embodiment the field data is analyzed by a vision machine learning model operating on the vision processor 1135 wherein the vision machine learning model was previously trained using training data collected from a plurality of controlled photo detection signal characterizations of various user surroundings. Preferably the vision machine learning model is capable of identifying potential threats to the user, e.g., a person carrying a weapon or a person hiding, fire or smoke proximate to the user, a suspicious vehicle, a muzzle flash, or the like. Preferably the vision machine learning model is capable of identifying triggering events, e.g., facial recognition of a fugitive, a vehicle license plate number associated with a crime scene, enemy soldiers, or the like. Preferably the vision processor 1135 is configured to identify frames associated with a threat, frames associated with a triggering event, or similar. Once identified, the associated frames are communicated by the vision processor 1135 to the helmet CPU 1015 and are stored in a helmet memory associated with the helmet CPU, and/or the associated frames may be uploaded by the helmet CPU to a remote network device for storage and further analytical consideration.

When a threat or a triggering event is detected by the vision processor 1135, the vision processor reports the threat to the helmet CPU 1015. This reporting occurs when the vision processor identifies characteristics of the photo detection signal that match predetermined vision threat criteria, vision threat rules, or vision threat policies stored on the vision memory. When a vision threat is detected, the vision processer 1135 will carry out vision threat rules or vision threat policies stored on the vision memory. The vision threat rules and policies may include formatting derived data or features of the derived data identified by the vision subsystem in a manner specified by the rules and policies; sending the formatted derived data or features of the derived data to the helmet CPU 1015; changing settings of the vision processor 1135 to a vision threat detection mode; and activating or otherwise sending commands to one or more of the vision output transducers 1080 and 1085 to display augmented images, e.g., with a graphical visual threat warning, a text visual threat warning, or with text or graphical instructions for how the user can avoid the threat. Alternately, vision processor 1135 may wait for a command from the helmet CPU 1015 before sending commands to one or more of the vision output transducers 1080, 1085.

### 6.3.5 Inertia Measurement Subsystem

The helmet system 1000 includes an Inertia Measurement Unit (IMU) subsystem 1200. The IMU subsystem includes an IMU processor 1205 in communication an IMU memory (not shown); with the helmet CPU 1015, with one or more IMU sensors 1210, and with one or more IMU transducers 1215. The IMU subsystem receives power from the energy source 1040.

In an exemplary embodiment, IMU subsystem 1200 is included in the helmet controller 1010. In other exemplary embodiments, the helmet system 1000 includes two or more IMU subsystems. In one embodiment each of the one or more IMU subsystems includes a separate IMU processor while in another embodiment two or more IMU subsystems can each share a common IMU processor. The IMU sensors 1210 preferably include a combination of accelerometers, gyroscopes, and/or magnetometers configured to sense an orientation of the helmet system 1000.

In a nonlimiting example the orientation of the helmet system is with respect to the earth's spherical global coordinates system e.g., defined by polar, longitudinal, and latitudinal axes. A combination of IMU signal values representing instantaneous inertia vs time values is generated by the IMU sensors 1210. The IMU processor 1205 receives field data from one or more IMU sensors for processing. The processing incudes modifying the field data by filtering and cleaning steps that include removing outlying signal amplitude values, filtering out signal noise, and reformatting the IMU field data for delivery to IMU transducers 1215.

The IMU processor 1205 simultaneously directs the field data to a subsystem analysis module operating on the IMU processor. The subsystem analysis module analyzes all or portions of the field data received from an IMU sensor using one or more analysis techniques including a machine learning model specifically trained for IMU sensor analysis. The machine learning model is trained to identify common IMU sensor characteristics and configured to derive information from field data received from vision sensors and to make a determination whether a triggering event or other threat has been detected or not and to generate derived data indicating the threat. In one embodiment, a machine learning model is trained to recognize a posture or activity type of a helmet user, for example standing, crouching, prone, or walking and to generate derived data representing the recognized posture or activity type. The IMU processor 1205 formats derived data according to one or more criteria, rules, or policies and communicates the derived data to the helmet CPU 1015. Otherwise, the IMU processor stores helmet orientation vs time values in the memory device associated with the IMU subsystem.

The IMU output transducer(s) 1215 includes one or more user feedback or warning devices, for example a sound generator or buzzer and/or a vibration generator disposed within the helmet system and used to alert the helmet user of a potential threat. The IMU output transducer(s) 1215 are actuated by the IMU processor 1205 when the derived IMU signal values indicate a potential user threat or triggering event. In an example a change in the orientation of the helmet system helmet system while the helmet user is driving a vehicle or piloting an aircraft may indicate a user threat. In response to the potential threat a warning device is activated, e.g., a warning sound is sent to the user earcup speaker or a vibration device attached to the helmet may generate a vibration felt by the user near the ear or jaw. In another use case, the helmet CPU may request that the IMU processor upload helmet orientation vs time values, for a specific time frame, to the helmet CPU when the helmet CPU evaluates a potential user threat triggered by another helmet subsystem.

### 6.3.6 Ambient light subsystem

The helmet system 1000 includes an ambient light subsystem 1230. The ambient light subsystem includes an ambient light processor 1235 in communication with: an ambient light memory (not shown); with the helmet CPU 1015; with one or more ambient light sensors 1240; with one or more ambient light transducers 1245; and optionally with the vision processor 1135. The ambient light subsystem 1230 receives input power from the energy source 1040.

In a non-limiting exemplary embodiment, the ambient light processor 1235 and the ambient light memory are incorporated within the helmet controller 1010. The ambient light sensors 1240 are mounted to an outside surface of the helmet shell 1005, and/or, may be mounted to or incorporated within other subsystem transducers, e.g., the vision sensors 1140, 1145, 1150, the display screens 1155 and 1160, and other devices that may be impacted by changes in ambient light. The ambient light transducers 1245 may further comprise lighting elements or illuminators mounted to the helmet shell 1005 for illuminating the surroundings. Non-limited exemplary illuminators include LED lighting elements or arrays emitting at selected visible wavelength ranges and/or emitting infrared (IR) lighting elements or arrays at selected IR wavelengths. The ambient light sensors 1240 comprise photodetectors configured to sense ambient light illuminance. Ambient light is conventionally measured in lux. In an example embodiment, the ambient light sensors 1240 sense ambient light in lux wherein less than 50 lux is considered dim lighting and 10K lux is considered equivalent to the illuminance of daylight a noon.

The ambient light processor 1235 receives field data, or raw field information which it converts to field data, from each of the ambient light sensors 1240. The field data at least comprises illuminance values vs time. The ambient light processor 1235 processes the field data by modifying the field data by filtering and cleaning steps that include removing outlying signal amplitude values, filtering out signal noise, and reformatting the field data e.g., by normalizing field data amplitude values to represent an illuminance vs time value for each of the ambient light sensors 1240. The modified field data comprises derived illuminance data.

The ambient light processor analyzes the modified field data to make a determination whether features of the field represent a threat to the helmet system user, represent a triggering event, represent a predetermined threshold value, and/or represent non-compliant rules and polices of the ambient light subsystem 1200 and, if so, generates derived data corresponding to the determined threat, triggering event, or threshold value. The ambient light processor formats the derived data according to one or more criteria, rules, and/or policies and communicates the formatted derived data to the helmet CPU. In some embodiments the ambient light processor 1235 stores field and/or derived data in the memory device associated with the ambient light subsystem 1230.

In a first non-limiting exemplary use case, ambient light transducers 1245 communicate with, or are incorporated within, the vision subsystem 1130. In a second, non-limiting use case, elements of the ambient light subsystem do not communicate with other subsystems. Instead, the ambient light processor 1235 communicates derived information, for example ambient light conditions, to the helmet CPU 1015, which in turn communicates commands or control signals including requested changes in configuration to the vision subsystem processor 1135.

In the first example, ambient light transducers 1245 report instantaneous ambient lighting conditions to the ambient light processor 1235 and notify the vision subsystem 1130 when a predetermined ambient light condition threshold level has been detected. In the second example, the ambient light processor reports a change in ambient light conditions, for example based on a trigger criterion being met, to the helmet CPU 1015 and, in response, the helmet CPU sends one or more commands to the vision processor 1135. The vision processor 1135 operates to control a brightness level of the display screens 1155 and 1160. The vision processor 1135 can also modify the brightness of the display screens 1155 and 1160 in response to other parameters in accordance with present ambient lighting conditions. Preferably a display screen brightness level is adjusted by the vision processor 1135 to provide the most suitable display screen viewing conditions for the detected ambient lighting conditions.

In a further non-limiting exemplary use case, in response to changes in ambient lighting conditions, the vision processor 1135 can be controlled by the helmet CPU to utilize one or more of the vision sensors 1140, 1145 or 1150 that are best suited for capturing images of the surrounding with detected ambient lighting conditions. Preferably selection of the appropriate vision sensor is made to provide the most suitable image capture for the detected ambient lighting conditions.

In a further non-limiting exemplary use case, in response to changes in ambient lighting conditions, , the vision processor 1135 can be controlled by the helmet CPU 1015 to modify exposure and or other settings of one or more of the vision sensors 1140, 1145 or 1150. Preferably the appropriate exposure or related settings are selected by the helmet CPU 1015 to provide the most suitable image capture for the detected ambient lighting conditions wherein the modified settings are more suitable image capture for the detected ambient lighting conditions.

### 6.3.7 Biometric subsystem

The helmet system 1000 includes a biometric subsystem 1260. The biometric subsystem includes a biometric processor 1265 in communication with: a biometric memory (not shown); with the helmet CPU 1015; with one or more biometric sensors 1270; and with one or more biometric transducers 1275. The biometric subsystem 1260 receives input power from the energy source 1040.

The biometric sensors 1270 are attached the helmet shell 1005 or to helmet padding, a helmet suspension system, or to another accessory attached to the helmet shell. Biometric sensors 1270 may also be attached to one or both earcup subsystems 1330, 1360 and or may be attached to a mandible guard assembly (not shown) attached to the helmet system 1000. Each biometric sensor is in communication with the biometric processor 1265 and each biometric sensor generates a stream of digital biometric signal values vs. time for the biometric characteristic being sensed. Exemplary biometric sensors 1270 include a heart rate sensor, a blood oxygen sensor, a skin temperature sensor, a respiration rate sensor, and a step counting sensor. Each biometric sensor is in communication with the biometric processor 1265. Each biometric sensor 1270 generates digital biometric signals corresponding to the sensed biometric characteristic, i.e., biometric field data.

The biometric processor 1265 receives biometric field data from each of the biometric sensors 1270. The biometric field data at least comprises sensor values vs. time. The biometric processor 1265 processes the biometric field data by modifying the field data to generate processed field data. The modification comprises filtering and cleaning steps that include removing outlying signal amplitude values, filtering out signal noise, and reformatting the field data, e.g., by normalizing field data amplitude values to represent a biometric sensor vs. time values for each of the biometric sensors 1270.

The biometric processor 1265 analyzes the processed biometric data to make a determination whether features of the processed biometric data represent a threat to the helmet system user, represent a triggering event, represent a predetermined threshold value and/or represent non-compliant rules and polices of the biometric subsystem 1260. If so, the biometric processor 1265 generates derived data that includes an indication of the threat, triggering event, threshold value, or non-compliance. For example, the biometric processor 1265 may recognize, based on biometric processed field data, that a user's heart rate is below a first threshold value, or above a second threshold value, and generate derived data that includes an indication that the heartrate is either too low or too high and/or the heart rate value. The biometric processor communicates derived data to the helmet CPU 1015. Otherwise, the biometric processor stores the biometric derived data in the memory device associated with the biometric subsystem 1260.

### 6.3.8 Touchless control subsystem

The helmet system 1000 includes a touchless control subsystem 1300. The touchless control subsystem includes a touchless control processor 1305 in communication with: a touchless control memory (not shown); with the helmet CPU 1015; with one or more touchless control sensors 1310; and, with one or more touchless control transducers 1315. The touchless control subsystem 1300 receives input power from the energy source 1040.

In an exemplary use mode, one or more touchless control sensors 1310 are placed in contact with the skin of a person wearing a touchless control sensor. Each touchless control sensor 1310 is a neuromuscular sensor configured to sense an electrical signal from the brain and to sense movement of muscles or tendons of a person wearing the touchless control sensor 1310. The touchless control sensor 1310 is further configured to generate neuromuscular signal field data comprising a stream of sensed neuromuscular values vs. time. The neuromuscular values correspond with a pattern of movement by the person wearing the touchless control sensor. The touchless control signal stream is received by the touchless control processor 1305 and processed thereby. Conventional touchless control sensors 1310 are placed in contact with the wrist of the user and the touchless control subsystem is trained to identify certain human gestures associated with movement of the hands or wrist proximate to the touchless control sensors. In an example, hand gestures can include pointing the index finger upward, downward, to the left, to the right, or rotating the index finger clockwise or counterclockwise, or similar. The touchless control subsystem is further trained to associate each human gesture with various commands. The command may include movement of a cursor displayed on a display screen, e.g., to select a menu item. Other commands associated with human gestures may include swiping the display screen, zooming in or out, selecting graphic features displayed on the display screen, or the like. Other commands associated with human gestures may include activating a switch, controlling a motion of a drone or vehicle, or the like.

The touchless control processor 1305 processes the touchless control signal, i.e., field data, by modifying the field data. The modification comprises filtering and cleaning steps that include removing outlying signal amplitude values, filtering out signal noise and reformatting the field data, e.g., by normalizing field data values to represent a stream of sensor vs. time values for each touchless control sensor 1310. The modified field data comprises processed touchless control signal data that represents a pattern of movement or gestures made by the person wearing the touchless control sensor. The touchless control processor is configured to recognize characteristics of the modified field data that correspond to triggering events, for example a pattern of movement associated with a particular command. In response to recognizing characteristics of the modified field data that correspond to a triggering event, the touchless control processor generates derived data and communicates the derived data to the helmet CPU 1015. For example, when the touchless control processor 1305 recognizes a pattern of movement associated with a particular command, it generates derived data that includes the command and communicates the derived data to the helmet CPU 1015. In another example non-limiting use case, the touchless control processor 1305 is configured to recognize patterns of movement that may indicate that a user is in distress; for example, a user's arm moving in an erratic or uncontrolled manner, or not moving at all. In response, the touchless control processor generates derived data that includes an indication of the distress and communicates the derived data to the helmet CPU 1015.

The touchless control transducers 1315 may communicate, to the helmet CPU 1015, derived data that includes a recognized command. The helmet CPU may, in response, communicate a command to another helmet subsystem processor, e.g., the vision processor 1135. In a use case example, a menu associated with the vision subsystem 1130 is displayed on one of the display screens 1155 or 1160. The menu is a part of a user interface used to operate the vision sensors 1140, 1145, 1150 and the menu displays a plurality of user-selectable commands on one of the display screens. To select one of the user selectable commands, the vision processor 1135 displays a cursor over the displayed menu. The user operates a touchless control sensor 1310, for example by performing a hand gesture associated with selecting and/or moving the cursor. The touchless control processor 1305 recognizes the hand gesture, generates derived data that includes an indication that the gesture has been performed, and communicates the derived data to the helmet CPU 1015. The helmet CPU 1015, in response to the derived data received from the touchless control processor 1305, sends a command to the vision processor 1135 which, in response, moves the cursor to a desired position on the displayed menu. A second hand gesture is used to select the desired.

In a further embodiment, the touchless control sensors 1310 are attached to the helmet shell 1005 and disposed contact the skin of the helmet user, e.g., in contact with the face or the neck. In these locations, the touchless control sensors 1310 are capable of detecting facial expressions as gestures or are capable of detecting neck movements as gestures e.g., by sensing rotation of the head to the left, the right, or up and down.

### 6.3.9 Audio subsystems

The helmet system 1000 includes a first earcup subsystem 1330 and a second earcup subsystem 1360. The first earcup subsystem includes a first earcup processor 1335 in communication with a first earcup memory (not shown), with the helmet CPU 1015, with one or more first earcup sensors 1340 and with one or more first earcup transducers 1345, described below. The first earcup subsystem 1330 is powered by the energy source 1040.

The second earcup subsystem 1360 includes a second earcup processor 1365 in communication with a second earcup memory (not shown}, with the helmet CPU 1015, with one or more second earcup sensors 1370 and with one or more second earcup transducers 1375, described below. The second earcup subsystem is powered by the energy source 1040. Each of the first earcup subsystem 1330 and the second earcup subsystem 1360 operates independently.

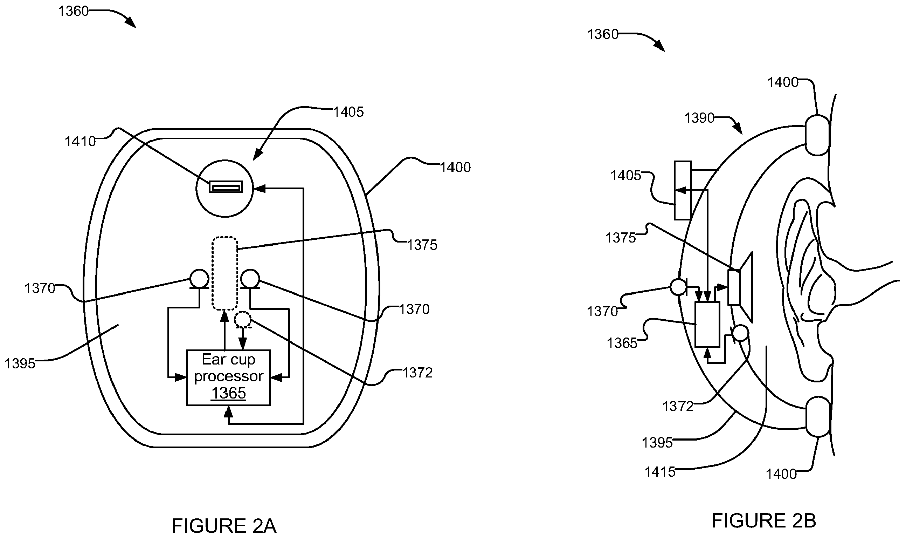

Figure 2A depicts a schematic side view of the second earcup subsystem 1360 as viewed from outside the helmet system. Figure 2B depicts a cutaway schematic front view of the second earcup subsystem as worn by the helmet user. Because the first and the second earcup subsystems 1330 and 1360 are substantially identical in structure and in their operating modes, only the second earcup subsystem 1360 is depicted in Figures 2A and 2B and described below.

The second earcup subsystem 1360 includes an earcup enclosure assembly 1390 comprising an enclosure wall 1395, a rim portion 1400, an attachment point interface 1405 and a network interface device 1410. The attachment point interface is positioned and configured to join the second earcup subsystem 1360 to the helmet system second attachment arm 1065 at the second attachment point 1072 shown in Figure 1. The enclosure wall 1395 is formed to enclose a hollow volume sound chamber 1415 surrounding the ear of the user. The rim portion 1400 is attached to the enclosure wall 1395 around a perimeter edge of the enclosure wall 1395. The rim portion 1400 is formed to seat against the head of the user, surrounding the user's ear. Together the enclosure wall 1395 and the rim portion 1400 form a sound barrier that blocks sound energy from entering the sound chamber 1410 through the enclosure wall and rim portion.

In a preferred embodiment the rim portion 1400 is formed to conform with the shape of the user's head when the user is wearing the helmet system. Each of the rim portion and the enclosure wall comprise acoustic insulating materials disposed to inhibit sound energy from entering the sound chamber 1415. The second earcup assembly 1360 is biased against the head of the user to further inhibit sound energy from entering the sound chamber. The biasing is provided by one or more biasing springs and or flexure elements formed by or attached to one or more of the second attachment arm 1065, the second earcup attachment point 1072 and/or the second helmet attachment point 1070.

The second earcup processor 1365, the second earcup memory (not shown), the second earcup sensors 1370, 1372 and the second earcup transducers 1375 are each attached to and supported by the enclosure wall 1395. Any wires or other conductive paths used for power distribution and or data or signal communication between the second earcup processor 1365, the second earcup memory, the sensors 1370, 1372, the transducers 1375, or the network interface device 1410 are preferably enclosed within the enclosure wall 1395 and the rim portion 1400 and/or within or attached to the second earcup arm 1065 or the helmet shell 1005.

In a non-limiting exemplary embodiment, the second earcup sensors 1370, 1372 include a plurality of audio microphones with one or more internal microphones 1372 disposed inside the sound chamber 1415 and with one or more external microphones 1370 disposed outside the sound chamber 1415. The microphones are either directly or indirectly supported by an inside or an outside surface of the second earcup enclosure wall 1395. The second earcup transducers 1375 include one or more audio speakers (shown as part of 1375 in Figure 2B) disposed inside the sound chamber 1410. The one or more speakers are directly or indirectly supported by an inside surface the enclosure wall 1395 with each speaker disposed to direct sound energy into the ear canal of the user.

Each internal microphone 1372 and the external microphone 1370 are configured to generate a digital audio signal, e.g., comprising a stream of digital voltage values vs. time or frequency. Each digital voltage value represents an instantaneous sound energy sensed by the corresponding microphone. The sound energy corresponds with sensing a Sound Pressure Wave (SPW) wherein an instantaneous sound energy value corresponds with an instantaneous amplitude of the SPW. The magnitude of a SPW, i.e., the instantaneous sound volume, is measured in decibels and the output voltage from the microphone corresponds with an instantaneous sound volume in decibels. Alternately, the voltage output from the microphone corresponds with an instantaneous pressure of the SPW measured in Pascals (Pa). The digitized sound energy signal output from each internal or external microphone is referred to below as audio field data.

Preferably the internal microphone 1372 and the external microphone 1370 have a frequency response equal to the range of human hearing, e.g., between 20 and 20K Hertz (Hz). Each internal and external microphone is interfaced with the second earcup processor 1365 over a different communication channel such that a stream of audio field data values is continuously received from each microphone and is processed separately by the second earcup processor 1365. In some applications at least one external microphone 1370 may have a frequency response that is broader than the range of human hearing to capture infrasound and or ultrasound wavelengths in the field data. Alternately, at least one external microphone 1370 may have a frequency response that is outside the range of human hearing to capture a specific sound energy spectrum in the infrasound or ultrasound wavelengths.

At least one speaker 1375 is disposed inside the sound chamber 1410 attached to and supported by the enclosure wall 1395. The speaker 1375 is configured to generate sound waves in response to an audio drive signal received thereby. The audio drive signal is generated by the second earcup processor 1365 and sent to the speaker. The audio drive signal is a stream of digital voltage values vs. time or frequency. Each digital voltage value represents an instantaneous sound energy or magnitude of a SPW to be generated by the speaker. The magnitude of the SPW, i.e., the instantaneous sound volume, is measured in decibels or in pressure values in Pa.

When processing second earcup subsystem field data the second earcup processor 1365 receives field data from one or more external microphones 1370 and directs the field data to a pass-through processing module of the second earcup processor. The pass-through module modifies the field data by filtering, cleaning, and reformatting the field data to provide processed data to the output transducer, audio speaker 1375. The filtering and cleaning steps include removing outlying amplitude values, filtering out audio noise, and reformatting the field data to match a format used by the second earcup speaker. The processed field data is then forwarded to the second earcup speaker to generate sound waves. The audio pass-through module further includes an active noise reduction module, or the like, configured to prevent sound volume from exceeding safe sound volume limits for prolonged periods, e.g., above 85 dB(A) for more than 8 hours, to above 100 dB(A) for more than 15 minutes. The audio pass-through module further includes a noise cancelling module operable to cancel some sounds all together, e.g., engine noise, helicopter rotor noise, equipment noise, or the like.

The second earcup processor 1365 simultaneously directs the field data to a subsystem analysis module operating on the second earcup processor 1365. The subsystem analysis module analyzes all or portions of the field data received from one or more external microphones 1370 and on a separate channel all or portions of the field data received from one or more internal microphones 1372. The subsystem analysis module uses various analytical techniques to determine information based on the incoming field data, for example evidence of a triggering event, a safety threat, or the like.

The earcup processor 1365 stores the processed field data in a memory of the second earcup subsystem and further analyzes the processed field data to detect characteristics, patterns, and features of the field data for further analysis. In an exemplary embodiment, the second earcup processor 1365 further includes a machine learning model specifically trained for audio microphone field data analysis. The machine leaning model is trained to identify common audio field data characteristics and configured to analyze audio field data and to make a determination whether a triggering event or other user threat has been detected or not. The earcup processor generates derived data based on the detected triggering event and/or safety threat. The derived data can include, for example, an indication that a triggering event or safety threat has been determined by the earcup processor and additional information regarding the triggering event or safety threat. The additional information can include, for example, a type of triggering event or safety threat, for example a gunshot or explosion, and information corresponding thereto, for example a direction from which the corresponding field data was received, a time stamp corresponding to the triggering event or safety threat, and, in some cases, a snippet of audio field data corresponding to the triggering event or safety threat.

### 6.3.10 Non-helmet subsystems

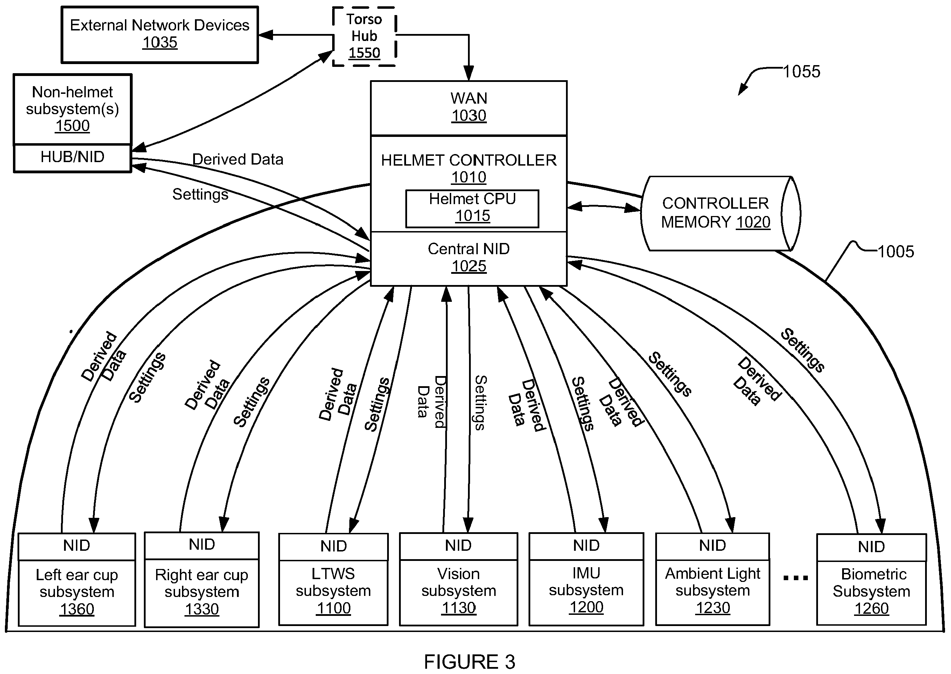

Returning to Figure 1, in some exemplary embodiments, the helmet CPU 1015 is in communication with one or more non-helmet subsystems 1500 over the network 1055 (see Figure 3). An exemplary non-helmet subsystem includes a non-helmet subsystem processor 1505, one or more in situ sensors 1510, and one or more output transducers 1515. Non-helmet subsystems 1500 are not mounted on or directly attached to the helmet shell 1015. Non-helmet subsystems 1500 collect field data using one or more sensors 1510, process the field data using the non-helmet subsystem processor 1505 to generate processed field data useful for a transducer 1515 and to recognize events and triggers in the field data. A non-helmet subsystem generates derived data, which it can store in a memory (not shown) and communicate to the helmet CPU 1015, for example over an ISW or other network connection. In some embodiments, two or more non-helmet subsystems are each in communication with a non-helmet hub 1517, which routes data, including derived data and configuration settings, between the non-helmet subsystems and the helmet CPU. In first example embodiments, the non-helmet hub communicates directly with the helmet controller 1010. In second example embodiments, the non-helmet hub communicates with the helmet controller over a torso-worn hub 1550. In embodiments, the non-helmet system hub 1517 and the torso-worn hub 1550 are each configured to route communications using one or more Local Area Network (LAN) or personal area network (PAN) protocols, for example one or more of USB, Bluetooth, and ISW.

A first example non-helmet subsystem includes a non-helmet weapon subsystem, for example a targeting sight or sight picture device mounted on a weapon. This example non-helmet weapon subsystem includes one or more image sensors which collect image field data, for example visible light and/or low light still images and/or video. The non-helmet weapon subsystem processor generates, based on the image field data, processed field data that includes image data for display on a display device, for example on a targeting scope. The non-helmet weapon subsystem processor also analyzes the image field data to recognize trigger features comprising the field data, for example an enemy soldier or vehicle, a particular face, a landscape or building feature, or a muzzle flash or explosion. The non-helmet weapon subsystem processor may generate derived data, for example data including an indication of a type of trigger feature recognized and/or an image of the trigger feature, and communicate the derived data to the helmet CPU 1015. In one exemplary embodiment, the non-helmet weapon includes one or more additional non-helmet weapon subsystems, for example a position sensor subsystem, for example a six degree of freedom position sensor, configured to generate derived data including positioning information corresponding to the weapon. Each non-helmet weapon subsystems may communicate with a weapon hub 1517, which in turn includes a communication link with the helmet controller 1010, either directly or via a torso-worn hub 1550, for example a via a smart hub. In some exemplary embodiments, is further configured for routing power between the non-helmet subsystems and other devices, for example a power source carried by a user.

### 6.3.11 Communication network

Referring now to Figs 1 and 3, the helmet system 1000 incudes a communications network 1055 comprising the central Network Interface Device (NID) 1025 in communication with the helmet CPU 1015 and in communication with each of the subsystems 1100, 1130, 1200, 1230, 1260, 1330, and 1360 and non-helmet subsystems 1500, described above and shown in Figure 3, over the network. Each subsystem includes a network interface device (NID).A non-helmet subsystem may include, and/or communicate with the helmet controller, over a non-helmet hub 1517. In some embodiments, and exemplary non-helmet subsystem 1500 and/or a non-helmet hub 1517 communicate with the helmet CPU 1015 via a torso-worn hub 1550.

The communication network 1055 further incudes a Wide Area Network (WAN) interface 1030 in communication with the helmet CPU 1015 and in communication with external network devices 1035 such as other helmet systems worn by other users, with WAN network communication access points or gateways and with other network devices 1500 worn by the user that are not part of the helmet system 1000. In some embodiments, one or more external network devices are in communication with the helmet CPU 1015 over a torso-worn hub 1050 although the torso worn hub may be excluded in some embodiments.

The central NID device 1025 preferably comprises a wired network interface device operating as a network access point for all of the network subsystems of the helmet system 1000. The network communication subsystem 1055 comprises a wired or wireless Local Area Network (LAN) or personal area network (PAN), e.g., Ethernet, Universal System Bus (USB), e.g. USB PD3, Bluetooth, intrasoldier wireless (ISW) network, Inter-Integrated Circuit (I2C), or near field induction. In some embodiments, the network communication subsystem 1055 includes two or more network types, for example USB and ISW. Each of the helmet subsystems includes a subsystem NID in communication with the corresponding subsystem processor. Each subsystem NID is compatible with whatever network protocol that the host central NID is configured for. The network communication subsystem 1055 can be formed as entirely or partially by a Wireless Local Area Network (WLAN), e.g., a Wi-Fi, a Bluetooth, ISW, or other wireless network interface protocol, without deviating from the present technology. External network devices 1035 can include an end user device (EUD), a squad-level radio, an Internet Protocol (IP) radio, a satellite network access point, a cellular network access point, a central or command control system, a data storage system, or the like.

In exemplary embodiments, the communication subsystem 1055 communicates with nonlocal command controller groups via the IP radio, e.g., to receive new configuration settings, updated tactical information, video images, text and voice communications, and to transmit updated tactical information, video images, text and voice communications from the helmet system 1000 to an external system reachable over the WAN 1030.

A smart phone or End User Device (EUD) worn or carried by the user is in communication with the WAN 1030, for example via a user-worn hub to which the IP radio is operably connected. The EDU is configured to run one or more applications operable to allow the user to modify helmet subsystem configuration settings, by accessing helmet system configuration settings via the EDU and entering modifications. Other smart phone applications, e.g., configured for tactical situational awareness and team communications, (e.g., an Android Tactical Assault Kit (ATAK) application), running on the EUD can be interfaced with the helmet system 1000 to exchange information, modify configuration settings, and update tactical information and communicate with other helmet users through helmet subsystems described herein.

The helmet CPU 1015 receives, from one or more external network devices 1035, settings, rules and policies applicable to operating the helmet system 1000 according to one or more predetermined operating modes. Settings, rules and policies can also be set by the helmet user by entry onto the EUD and storage on the controller memory 1020.

Exemplary settings received by the helmet CPU 1015 include map sets and IP addresses (of other members of a squad). Other settings received by the helmet CPU 1015 include, for example, operating parameters or operating modes of components of one or more subsystems and settings for one or more analysis tasks to be carried out by one or more subsystems. Settings for analysis tasks include, for example, one or more trained ML models for operation by a subsystem processor during analysis or a pass-through processing tasks, what to look for in sensory data, triggering conditions for predefined events, actions to be taken if a predetermined event is triggered, and threat-based inputs/detection targets (e.g., faces, vehicle types, registrations to be on the lookout for). In some embodiments, the helmet CPU 1015 receives, from the one or more external network devices 1035, threat based inputs that include intelligence that may be on the secret level. In these embodiments, a user may not be aware of the inputs. The helmet CPU can receive, from the one or more external network devices 1035, settings for a subsystem processor to use for processing field data to generate processed data for use by an output transducer. The helmet CPU 1015 may, alternatively or in addition, autonomously determine settings for processing of field data. The helmet CPU 1015 saves settings in controller memory 1020.

Settings, rules and policies received by the helmet CPU 1015 from external network devices may be mission specific, e.g., specific to time of day, duration, climate, total distance, elevation changes, available stored energy, or the like. Settings, rules, and policies received from external network devices may be role-specific wherein the helmet system is configured to best accommodate the user role; e.g., different roles may include a communication specialist, a squad leader, a weapons specialist, a medical specialist, a surveillance specialist, or similar. Settings, rules, and policies received from external network devices may be subsystem specific e.g., when a subsystem is configured to detect specific information in sensory field data throughout the mission, e.g., evidence of changes in the surroundings, evidence of vehicle tracks, of potential energy charging opportunities, of radio communication of target illuminations, or similar. Settings, rules, and policies received from external network devices may be non-mission specific, e.g.; when the settings include detecting specific information related to missing persons, to specific vehicle types, or vehicle license plates or the like which may be ongoing during the mission. In some embodiments, the helmet CPU receives threat-based inputs that include intelligence that may be on the secret level. In these embodiments, a user may not be aware of the inputs.

After receiving settings, rules and policies from external network devices 1035 the helmet CPU 1015 generates one or more configuration profiles for each helmet subsystem and non-helmet subsystem. Each configuration profile includes settings, rules, trained ML models, and policies that can be specific to that subsystem and to that specific mission or helmet user. In some embodiments, the helmet CPU 1015 generates multiple configuration profiles for one or more helmet subsystems and non-helmet subsystems. Each configuration profile includes settings for a particular subsystem or for a particular type of subsystem, for example settings defining one or more of: how a subsystem processor processes field data received from an input sensor; what processed field data the subsystem processor generates for presentation by an output transducer; what trained ML model the subsystem processor should use to generate derived data, and type and format of derived data a subsystem processor generates and communicates to a helmet CPU.. In an exemplary embodiment, a configuration profile includes a specification of how a subsystem processor should process and format derived data to generate one or more whole or partial input vectors or feature sets configured to be used as input for a ML or AI model operated by the helmet CPU 1015.

The configuration profiles can be sensor and or output transducer specific, e.g., when the vision subsystem is only configured for night vision or when the LTWS subsystem is only configured to detect a specific wavelength range. The configuration profiles can also be specific to the subsystem analysis module e.g., when algorithms and or machine learning parameters are modified to identify information that is specific to that particular subsystem sensory data.

Each subsystem and non-helmet subsystem is configured to generate derived data based on or in response to analysis of field data by the subsystem's processor. Example derived data includes alerts; identifications or recognized objects, sounds, etc.; time, location, and orientation information; and sampled portions of field data. A subsystem processor communicates derived data to the helmet CPU 1015. In some embodiments, the subsystem processor formats the data according to one or more formatting rules or policies previously communicated to the subsystem processor by the helmet CPU.

### 6.3.12 Exemplary Subsystem

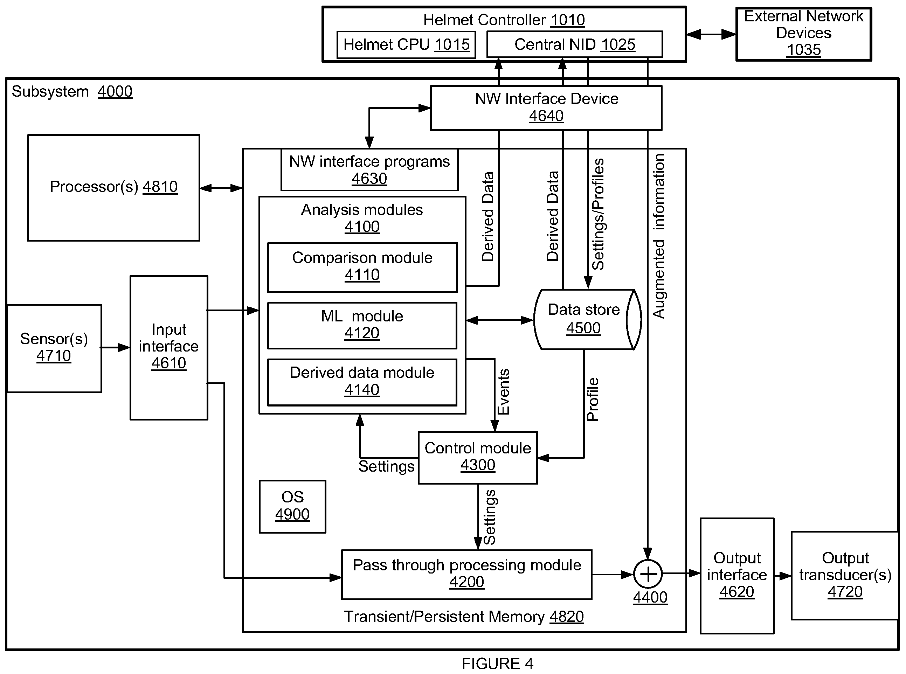

Figure 4 shows a schematic diagram of an exemplary subsystem 4000. Referring now to Figures 1 and 3, each subsystem 1100, 1130, 1200, 1230, 1260, 1330, 1360 and non-helmet subsystem1500 is configured in a similar manner as subsystem 4000 shown in Figure 4, although some subsystems may not include all components shown in Figure 4. For example, a particular subsystem may not operate a machine learning model and as such may not include a ML module 4120.

Subsystem 4000 includes one or more subsystem processors 4810. Subsystem processor(s) 4810 are in communication with transient/persistent memory 4820.

Transient/persistent memory 4820 includes a data store 4500 which stores settings, derived data, and sampled data. Settings include persistent and transient settings. Persistent settings include a plurality of persistent subsystem operating programs, operating modes, settings, rules, policies, or the like, that correspond with routine operation of the subsystem 4000 by the subsystem processor 4810. The persistent programs are stored in memory 4820 and are loaded onto the subsystem processor 4810 during a helmet system startup. In example embodiments, some or all of the persistent programs may be stored in the memory 4820 during manufacture or pre-deployment configuration of the subsystem 4000 or may be loaded onto the memory by the helmet CPU 1015. The persistent programs may include programs for requesting power from an energy source, for establishing network communication links with the sensors 4710, transducers 4720, and with the helmet CPU 1015, for receiving field data from the sensors, and for routing data to transducers and external devices. The persistent programs can also include programs for performing analysis of field data, for example one or more analysis modules 4100 and modules that comprise the analysis module.

The memory 4820 also includes a plurality of transient subsystem operating schema. The transient subsystem operating schema include operating programs, operating modes, settings, rules, policies, or the like, that correspond with non-routine or specifically directed operation of the subsystem 4000 by the subsystem processor 4810. In some embodiments, the transient subsystem operating schema include settings for one or more persistent programs. For example, a persistent analysis module 4100 can include a comparison module 4110 and a ML module 4120 while transient operating schema can include comparison algorithms or templates and or trained machine learning models for use by the analysis module 4100. The transient subsystem operating schema are typically communicated from the helmet CPU 1015 to the subsystem 4000 and are stored by the subsystem in one or more datastores 4500. Transient subsystem schema are loaded onto the subsystem 4000 during helmet system startup and may be updated and/or replaced by the helmet CPU 1015 during operation of the helmet system.

Transient/persistent memory 4820 stores program code, including an operating system 4900, and multiple programs and modules comprising permanent programs and transient subsystem schema, that when executed by subsystem processor 4810, convert the subsystem into a sensory data processing system. The permanent programs and transient subsystem schema are specific to a particular subsystem. For example, a vision subsystem in configured with vision subsystem permanent programs and transient vision subsystem schema that are specific to a vision subsystem while and audio subsystem is configured with audio subsystem permanent programs and transient audio subsystem schema. Subsystem processor(s) 4810 are in communication with transient/persistent memory 4820 and configured to instantiate and execute one or more program modules stored thereupon.

Subsystem 4000 includes network interface device 4640 and associated network interface programs 4630 for communication of signals between the subsystem processor 4810 and the helmet CPU 1015. In some embodiments, power for operating the subsystem is received from the network interface and network traffic is exchanged over the network interface. In an exemplary embodiment, network interface device 4640 includes a USB network interface that enables exchange of both communication and power signals between the helmet controller 1010 and the subsystem 4000. However, the network interface device 4640 can comprise a LAN or WLAN network interface device based, for example, on a Wi-Fi, Bluetooth, ISW, Ethernet, Peer to Peer, or other PAN, LAN or WLAN network protocol. In some embodiments, power for operating one or more subsystems is received over a power interface that is separate from a network interface.

Subsystem 4000 includes one or more in-situ sensors 4710 mounted to, embedded in or extending from the helmet shell in communication with the subsystem processor 4810. Some embodiments of subsystem 4000 include an input interface 4610. An input interface is a hardware or software device for receiving input signals representing sensory data received from the input transducers and generating, based on the input signals, digital sensory data suitable for processing by programs and modules executed by the subsystem processor. An example input interface is an audio codex that receives analog signals representing sound from one or more microphones and produces, based on the analog signals, digital representation audio data. An example input interface can perform one or more of signal filtering, frequency filtering, averaging, compression, protocol translation, and normalization.

Subsystem 4000 includes one or more output transducers 4720 in communication with the subsystem processor 4810, in some embodiments through one or more optional output interfaces 4620. The output interface 4620 converts digital output signals generated by the subsystem processor into analog output signals for analog output transducers. An exemplary output interface includes an audio codex. An example output interface can perform one or more of signal filtering, frequency filtering, averaging, compression, protocol translation, and normalization. In embodiments that include digital output transducers, output interface 4620 may be omitted.

Data store 4500 is in communication with analysis module 4100, control module 4300, and with helmet CPU 1015 via network interface 4640. Data store 4500 includes one or more databases or other data structures suitable for storing data including one or more subsystem settings or profiles received from the helmet CPU 1015, derived data generated by derived data module 4140, and raw and processed field data and sampled portions thereof.

A pass through processing module 4200 is in communication with one or more in situ sensors 4710, in some embodiments via input interface 4610. The pass through processing module 4200 is in communication with data combination module 4400.

Data combination module 4400 is in communication with pass through processing module 4200, one or more transducers 4720, in some embodiments via output interface 4620, and the helmet CPU 1015. In an alternative embodiment (not shown) data combination module 4400 is in communication with data store 4500 and retrieves data stored therein by the helmet CPU 1015.

The pass through processing module 4200 receives, via the input interface 4610, field data generated by one or more in situ sensors 4710. The pass through processing module 4200 operates on the field data to generate processed data suitable for use by an output transducer 4720. In an example use case comprising an audio subsystem, e.g. the first earcup 1330, the pass through processing module 4200 receives audio field data from one or more in situ audio sensors, e.g. from one or more microphones. The audio field data includes situational awareness information, i.e. audio cues corresponding to an environment surrounding the earcup, for example sounds generated by nearby people, animals, machinery, or weather phenomena. The pass through processing module 4200 performs one or more pass through processing operations on audio field data, thereby generating audio processed field data that can be played on one or more speaker transducers. Non-limiting example pass through audio signal processing operations include implementing an automatic noise reduction (ANR) algorithm to filter out unwanted sounds, e.g. repetitive sounds generated by a motor vehicle; operating a filtering algorithm to augment desired sounds, e.g. voices; and reducing the volume of sounds having a greater than threshold magnitude.

In some embodiments, a data combination module 4400 combines augmented data received from helmet CPU 1015 with processed data generated by the pass through processing module 4200 to generate digital output data comprising augmented field data. Augmented field data includes processed field data blended with augmented data. The augmented field data is formatted in a manner suitable for use by an output transducer 4720. In a first example use case including an audio subsystem, the augmented data can include voice data received by the helmet CPU 1015 from an external system 1035 such as an IP radio or from another helmet system or an audible warning signal generated by the helmet CPU. In a second use case including a vision subsystem, for example, and referring to Figure 1 vision subsystem 1130, example nonlimiting, augmented data can include still images or video footage received by the helmet CPU from an external system, for example video footage from a drone system, or one or more of a visual alert or an additional display element, e.g. an icon, map overlay, compass overlay or the like, generated by the helmet CPU 1015. In the second use case, augmented data can be displayed on vision system transducer, for example on a screen 1155, 1160 of a HUD 1080, 1085 in addition to processed field data comprising a live video feed from one or more video system sensors 1140, 1145, and or 1150.

An analysis module 4100 performs one or more analysis processing tasks using the field data as input. In an exemplary embodiment, the analysis module processes the field data to recognize triggering events. This occurs when the analysis module identifies characteristics of the field data that match predetermined trigger conditions. Trigger conditions are encoded in one or more of threat criteria, threat rules, or threat policies provided to the subsystem 4000 by the helmet CPU 1015 and stored on the subsystem memory 4820. Trigger conditions include one or more of an anomalous condition, i.e. a condition that meets pre-configured trigger criteria. Example anomalous conditions include an explosion, gunshot, or sound of a motor or engine recognized in audio or video field data. Other exemplary trigger conditions include recognition of a specific face or license plate in video field data or recognition of specific words or sounds in audio field data.

The analysis module 4100 includes a comparison module 4110 which is configured to recognize events by comparing field data to one or more comparison criteria such as, for example, a threshold volume, one or more rules, or a target mask representing a sound or a pattern of sounds. Non-limiting examples of event recognition by the comparison module 4110 include detection of a peak in audio field data with greater than a threshold volume or detection of a particular sound by comparison of audio field data to a target mask representing the sound.

The analysis module 4100 includes a machine learning (ML) module 4120 that loads and executes a trained ML model. The subsystem 4000 can be configured with one or more trained ML models prior to a mission. Typically, the helmet CPU 1015 loads one or more ML models onto the subsystem 4000 during startup of the helmet system 1000. Trained ML models can be stored in the subsystem datastore 4500 and can be subsequently selected for use by the ML module 4120. Alternatively, a ML module 4120 or the datastore 4500 can be pre-configured with one or more trained ML models instead of dynamically loading trained ML models at system startup. The ML module 4120 can select and load a particular trained ML model for execution. The ML module 4120 can, during a mission, offload a first trained ML model and load a second trained ML model. The ML module typically loads a trained ML model, or switches trained ML models, in response to a communication from the helmet CPU 1015 or in response to an event or condition detected by the subsystem. For example, a command from the helmet CPU 1015 or a detected event may cause the subsystem to transition from a first operating mode to a second operating mode wherein the two operating modes require use of different trained ML models. In a first particular non-limiting, example, a vision subsystem may transition from a rural landscape operating mode to an urban environment operating mode and, as part of the transition, offload a ML threat recognition model trained for a rural environment and load a ML threat recognition model trained for an urban environment. In a second particular non-limiting example, an audio system may load a trained engine sound classification ML model in response to detection of an unspecified engine or motor sound. The engine sound classification ML model may be a simple model, for example a trained ML tank identification model that generates output comprising a binary tank/no tank trained recurrent neural network (RNN). In a third non-limiting example, a second subsystem may receive a configuration file from the helmet CPU 1025 including instructions to load a particular trained ML model in response to a triggering event detected by a first subsystem. For example, the helmet CPU may communicate a configuration change to a video subsytem that includes loading a local convolutional neural network (CNN) trained to identify drones in image data in response to receiving, from a LTWS threat subsystem, derived data that includes detection of a laser illumination event corresponding to a drone-based laser targeting system.

The ML module 4120 operates a trained ML model using field data as input. The ML module 4120 may perform one or more formatting and/or cleaning or filtering operations on the field data to generate ML model vectors or features suitable for use as inputs for a particular ML model. The ML module 4120 can operate the trained ML model on field data, or vectors or features generated based on the field data, to predict the presence of one or more anomalous conditions or triggers.

The ML module 4120 is configured to train and retrain ML models. Alternatively, or in addition, the helmet CPU 1015 or one or more external network devices 1035 trains and retrains ML models. In some embodiments the ML models are trained using a readily available database of training data. For example, an ML model configured to be operated by an ear cup processor 1330, 1360 can be trained on a library of recorded sounds prior to deployment. Non-limiting examples of libraries of recorded sounds include a library from an external source such as the Soundogs Military Sounds Archive or a digital repository of sounds generated by one or more users, e.g., sounds recorded using in situ sensors comprising an ear cup or other audio sensors. In a like manner, other subsystems can each train one or more ML models using field data recorded by the subsystem or field data recorded by similar subsystems or sensors similar to in-situ sensors of the subsystem.

In some embodiments, the ML module 4120 trains and re-trains ML models using field data acquired during a mission. Retraining can be performed during a mission or upon completion of a mission.

In some embodiments, a helmet system 1000 or one or more individual subsystems 4000 are operated in an environment with simulated real-world conditions; for example, on a simulated battlefield or training session with simulated gunfire, explosions, laser range finding, and the like. The subsystems collect field data and the collected field data is used to generate training data. In some embodiments, ML models are trained using training data generated based upon field data collected and recorded by subsystems during one or more real-world missions. In some embodiments, ML models are trained using training data generated based on data collected by one or more other subsystems during real world or simulated missions, for example a first vision system ML model can be trained using video footage recorded by one or more different second vision systems worn by soldiers during a mission. The training data is used to train one or more ML models.

The subsystems record field data, for example, by saving data to data store 4500. The recorded field data may be parsed and labeled by a human operator to generate a labeled training data set and subsequently used to train one or more ML models. Alternatively, the recorded field data may be used without labeling to train one or more ML models using unsupervised learning. In an exemplary embodiment, if a ML model operated by analysis module 4100 fails to classify a condition or trigger during a mission, the derived data 4140 may generate a sample of field data associated with the anomalous condition or trigger and save the sample to data store 4500. In some embodiments, the saved sample can later be used to train or retrain a ML model. In some embodiments, a saved sample can be communicated to the helmet CPU 1015 for further processing, for example for classification by a trained ML model operated by the helmet CPU. The helmet CPU, in some cases, communicates the saved sample to one or more external network devices 1035 for further analysis.

Analysis module 4100 includes derived data module 4140. When an event such as an anomalous condition or trigger is recognized or predicted by one or more of comparison module 4110 and ML module 4120, in response the derived data module 4140 generates derived data corresponding to the anomalous condition or trigger. Event derived data can include characteristics of the anomalous condition or trigger, for example an identification of a gunshot, face, or license plate recognized by the analysis module, and information corresponding to the anomalous condition or trigger, for example a time, date, direction, or heading.

In an exemplary embodiment, the derived data module 4140 generates event derived data that include model input data, for example input vectors, features, or other formats useful as input for a ML or AI model operated by the helmet CPU. In some embodiments, to generate model input data the derived data module 4140 may clean digital field data (e.g. remove out of bounds values, interpolate missing values), perform one or more analysis and/or transform operations on the data, and save the model input data in a format that is compatible with at least one ML or AI model operated by the helmet CPU.

Control module 4300 retrieves a subsystem configuration profile from data store 4500 and configures operation of subsystem components according to the retrieved profile. Control module 4300 configures operation of analysis module 4100, for example by specifying one or more ML models or algorithms for the analysis module to load and run as well as specification of anomalous conditions or triggers. Control module 4300 configures operation of pass through processing module 4200 according to a selected profile, for example by specifying how the pass through processing module should filter or otherwise transform digital sensory data to generate digital output data. A particular profile can include specification of autonomous alterations for control module 4300 to make to settings of a subsystem (or selection and implementation of a new configuration profile) in response to one or more detected triggers or events. Subsystem 4000 can receive a new or updated profile, or instructions to switch from a first profile to a second profile, from the helmet CPU 1015, in which case control module 4300 reconfigures operating parameters of the subsystem according the new or updated profile.

### 6.3.13 Exemplary subsystem information flow

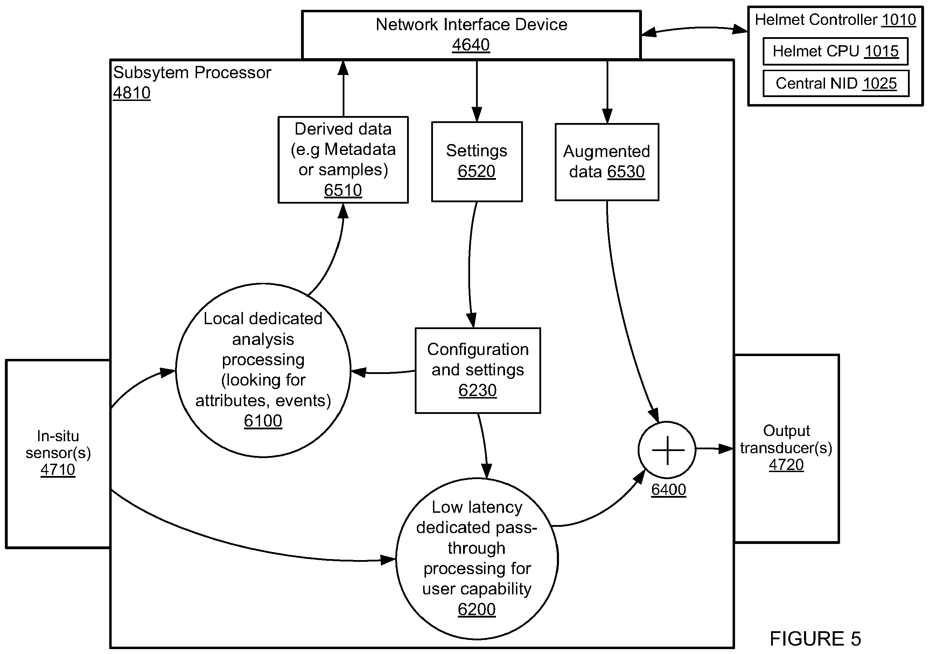

Figure 5 includes an information flow diagram illustrating data processing by an exemplary subsystem processor 4810 as well as information flow between the exemplary subsystem processor and helmet CPU 1015 through network interface device 4840. Referring now to Figures 1 and 4, subsystem processor 4810 represents any one or subsystem processors 1105, 1205, 1305, 1265, 1135, 1335, 1365, or a subsystem processor comprising a non-helmet subsystem 1500.

Referring once again to Figure 5, the subsystem processor 4810 receives settings 6520 from the helmet CPU 1015. In an exemplary embodiment, the subsystem processor receives the settings as one or more configuration profiles provided by the helmet CPU 1015.

The subsystem processor uses the settings 6520 to configure processing of sensory input data at 6230. The subsystem processor configures local dedicated analysis processing 6100 and pass through processing 6200.

The subsystem processor performs local dedicated analysis processing 6100 of sensory input data received from one or more input transducers 4710. Local dedicated analysis processing 6100 can include recognition or prediction of events or triggering conditions corresponding to events which include, for example, anomalous conditions and characteristics of the sensory environment that the subsystem processor has been configured to detect. Local dedicated analysis processing includes generation of derived data 6510 related to events and/or samples of field data. For example, referring to Figure 4, if output of ML module 4120 running an audio ML model includes detection of a gunshot, the derived data module 4140 may generate event derived data that includes identification of the gunshot along with peak amplitude and timing data generated based on digital sound signals corresponding to the gunshot.

The subsystem processor 4810 communicates derived data to the helmet CPU 1015 at 6510.

The subsystem processor performs dedicated pass through processing of field data at 6200. Pass through processing includes modifying derived data received from one or more in-situ sensors 4710 to generate processed data suitable for presentation on one or more output transducers 4720. Pass through processing occurs close to each of the in-situ sensors and output transducers and has low latency to reduce lag between sensing and presenting sensory data to a user.

The subsystem processor can receive augmented data from the helmet CPU 1015 at 6530. Augmented data can include, for example, an audio data stream, a video data stream (e.g. video feed from a drone), and augmented reality (AR) visual cues (e.g. compass directions, waypoint markers, indicators of location of friendly or enemy troops). At 6400, the subsystem processor combines augmented data with processed field data generated by pass through processing at 6200. For example, the subsystem processor can combine augmented data that includes a visual indication of the location of one or more enemy units with visual processed field data generated based on processing of visual field data to generate information to be displayed on a HUD device that includes the visual indication overlaid on the visual processed field data.

### 6.3.14 Exemplary subsystem operation

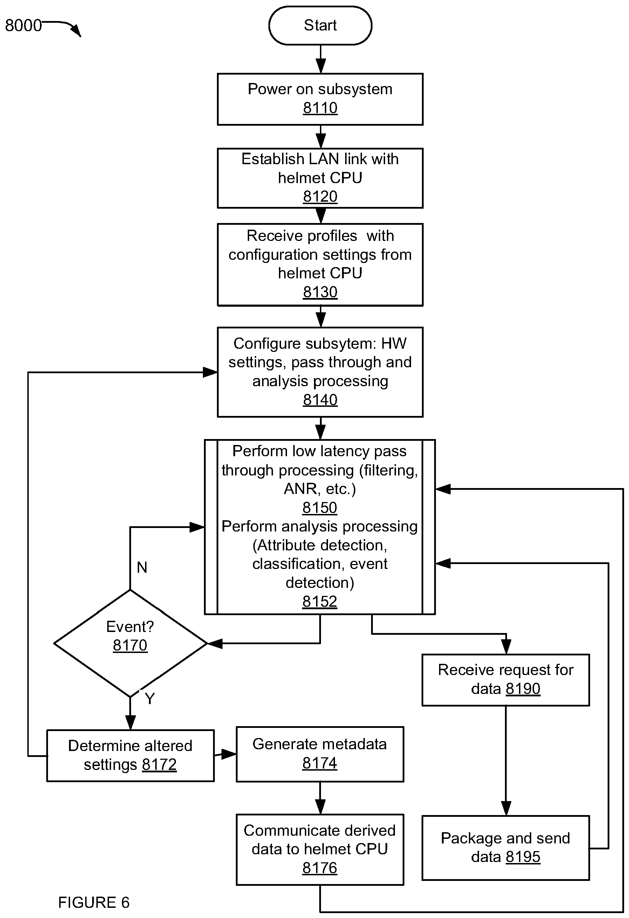

Figure 6 includes a flow chart illustrating an exemplary operating mode 8000 of an exemplary subsystem (i.e. of any helmet-mounted subsystem 1100, 1130, 1200, 1230, 1260, 1330, and 1360 or a non-helmet subsystem 1500).

The subsystem is powered on at step 8110. Some subsystems power on as part of a helmet system power on and others power on when they are operationally connected to a helmet subsystem or when a user activates the subsystem; for example by operating a power switch. In some exemplary embodiments, a subsystem is connected to a helmet CPU via a USB network and receives, from a helmet control box, power over USB.

At step 8120, a subsystem processor, e.g. 4810, establishes a local area network (LAN) communication link with a helmet processor 1015. In some exemplary embodiments, the subsystem is connected to a USB network that includes the helmet processor and establishes a USB communication link with the helmet CPU.

The subsystem processor receives configuration information, for example one or more subsystem configuration profiles, from the helmet CPU at step 8130 and configures operational aspects of the subsystem at step 8140. In an exemplary embodiment, the subsystem processor configures operational aspects of the subsystem according to one of the one or more subsystem configuration profiles. Configuring operational aspects of the subsystem includes configuring operating modes of one or more in-situ sensors and output transducers, and configuring pass through and analysis processing.

At step 8150, the subsystem processor iterates low latency pass through processing and analysis processing. The subsystem processor continues to iterate steps 8150 and 8152 until instructed to stop; for example, when one or more operational configurations are updated, or when the subsystem is powered down and or disengaged from the helmet system.

A subsystem processor may optionally receive, from the helmet CPU 1015, a request for field data at step 8190. This can occur when an external network device 1035 requests field data, for example audio data from an ear cup subsystem microphone or video data from a vision subsystem camera. In an exemplary embodiment, an external network device requests digital video field data from a video system to enable display of operational conditions at a monitoring site, for example at a headquarters location. In another exemplary embodiment, the helmet CPU 1015 requests data corresponding to an event from one or more subsystems. In a particular exemplary implementation, the helmet CPU may receive derived data corresponding to an event from one or more first subsystem processors and, in response, request field data or derived data from one or more other second subsystem processors. The subsystem processor packages and delivers the requested field data and/or derived data at step 8195 and continues performing pass through processing and analysis processing at step 8150/8152.

While performing analysis processing, the subsystem processor may recognize or predict an event 8170. If so, the subsystem processor may optionally determine one or more alterations to the subsystem configuration at step 8172. The subsystem processor can determine one or more configuration alterations autonomously; for example. the subsystem processor can determine changes to filter and thresholding settings based on detected events, which allows the subsystem processor to respond more quickly to new and evolving conditions than if the alterations were initiated by a higher level process; for example, one running on the helmet CPU. If any settings are altered, the subsystem processor re-configures the subsystem at step 8140 following which processing of field data at step 8150 is performed using the altered settings.

If a configuration profile specifies that the subsystem processor should generate derived data in response to a recognized or predicted event, the subsystem processor generates the derived data at step 8174 and communicates the derived data to the helmet CPU at step 8176.

### 6.3.15 Exemplary helmet controller

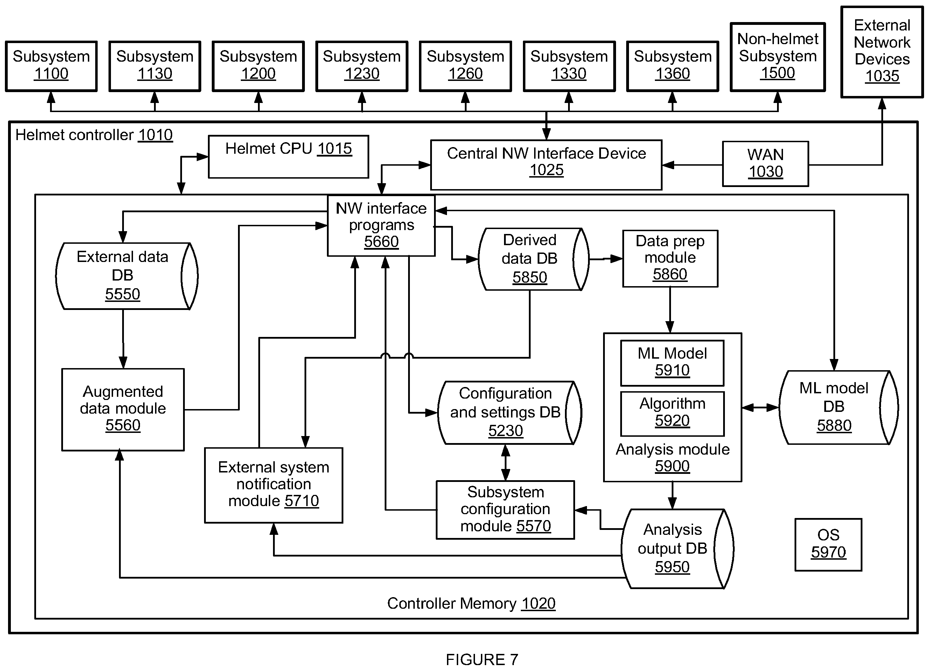

Figure 7 shows a schematic representation of an exemplary system 5000 that includes a helmet CPU 1015 in communication with transient/persistent controller memory 1020. The helmet CPU and controller memory are components of helmet controller 1010. The helmet controller 1010 includes a central network interface device (NID) 1025 which is communicatively coupled with system components including subsystems 1100, 1130, 1200, 1230, 1260, 1330, 1360, non-helmet subsystem 1500, and torso-worn hub 1550. In an exemplary embodiment, the central NID 1025 includes one or more of a USB network interface, an ISW interface, a Bluetooth interface, or another wired or wireless network interface. The helmet controller 1010 includes a WAN interface 1030 over which a communication connection can be established between the helmet controller and one or more external network devices 1035

Figure 7 illustrates information flow and data processing by the helmet CPU 1015. The information flow includes the helmet CPU receiving external data including settings rules and policies from remote external network devices 1035 and storing the external data in an external data DB 5550. The external data is also stored in a configuration and settings DB 5230 and is retrieved therefrom by a subsystem configuration module 5570 which operates to divide the external settings rules and policies into subsystem specific settings rules and policies. The subsystem specific settings rules and policies are then routed for delivery to appropriate subsystems and used to configure the subsystem.

Subsystem data, including derived data, and other messages are received from each of the subsystems via the central NID 1025. The subsystem data includes messages reporting detection of potentially important triggering events and or other data patterns or characteristics that require reporting to the helmet CPU 1015 as well as derived data sets received form one or more subsystems. Derived data received from subsystems is routed to a derived data memory 5850 and may be prepared, by a data preparation module 5860, for analysis by an analysis module 5900 operated by the helmet CPU 1015. Analysis output data generated by the analysis module 5900 is stored in analysis output database 5950 and is routed therefrom to a systems configuration module 5570 and to an external notification module 5710. The systems configuration module 5570 may modify settings rules and policies of the helmet CPU 1015 and one or more subsystems based on the analysis output. The external notification module 5710 may report analysis output to remote network devices 1035.

The helmet CPU 1015 can receive augmented data from an augmented data module 5560. In non-limiting examples, the augmented data may comprise one or more of an audio data stream, a video data stream (e.g., video feed from a drone), or digital data encoding one or more visual cues (e.g., compass directions, waypoint markers, indicators of location of friendly or enemy troops). The augmented data is routed to appropriate subsystems and may be combined with processed data for delivery to the helmet user over an output transducer, e.g., an earcup speaker or a heads-up display.

Controller memory 1020 includes multiple data stores for storing digital data, an operating system 5970, and multiple programs and modules that are each operable by the helmet CPU to perform tasks.

Controller memory 1020 includes network interface programs 5660 which provide one or more communication interfaces between modules and databases stored in controller memory 1020 and helmet subsystems, non-helmet subsystems, and external network devices 1035. The external data database 5550 is in communication with network interface programs 5660 and with the augmented data module 5560. The augmented data module is in communication with the network interface programs 5660, external data database 5550, and analysis output database 5950. The external system notification module 5710 is in communication with the derived data database 5850, analysis output database 5950, and with network interface programs 5660. Configuration and settings database 5230 is in communication with subsystem configuration module 5570 and with network interface programs 5660. Subsystem configuration module 5570 is in communication with configuration and settings database 5230, analysis output database 5950, and with network interface programs 5660. Analysis module 5900 is in communication with data preparation module 5860, ML model database 5880, and analysis output database 5950. ML model database 5880 is in communication with analysis module 5900 and network interface programs 5660. Data preparation module 5860 is in communication with derived data database 5850 and analysis module 5900. Derived data database 5850 is in communication with network interface programs 5660, external systems notification module 5710, and with data preparation module 5860.

The derived data database 5850 stores derived data received by the helmet processor from one or more subsystems. The derived data stored in derived data database includes event derived data, i.e. derived data corresponding to one or more events that were detected or predicted by a subsystem processor that generated and supplied the derived data. In a particular embodiment the event derived data includes model input data; for example, input vectors, features, or other formats useful as input for a ML or AI model.

The derived data stored in the derived data database can include samples of field data received from one or more subsystems. The samples of field data may be retained in the derived data database for post-mission processing and or for use as a source of training data to train or retrain one or more machine learning models.

Data preparation module 5860 retrieves derived data from the derived data database 5850, processes the derived data to generate model input data for one or more ML models or algorithms, and communicates the model input data to analysis module 5900. In an exemplary embodiment wherein the derived data retrieved by the data preparation module includes model input data, processing of the data by the data preparation module may comprise selecting types or instances of data for input to a particular ML model. In other embodiments, the data preparation module 5860 can perform one or more analysis and formatting operations to generate, based on derived data, ML model input data.

The ML model database 5880 is used to store one or more trained and/or untrained ML or AI models, and in some embodiments one or more algorithms. Algorithms, ML models, and AI models can be downloaded or pushed to ML model database 5880 from one or more external network devices 1035.

Analysis module 5900 loads, from the ML model database 5880, one or more trained ML or AI models 5910 and execute the one or more trained ML or AI models to generate ML or AI model output data; for example one or more predictions, detections, or characterizations. The analysis module 5900 can receive, from the data preparation module 5860, ML model input data (i.e. input data for execution against one or more trained ML models 5910) and/or input data for execution against one or more algorithms 5920. Analysis module stores analysis output data, which can include ML model output data and algorithm output data, to the analysis output database 5950.

The analysis module 5900 can load, from the ML model database 5880, one or more trained or untrained ML models and train or retrain the one or more models. In an exemplary embodiment the analysis module trains or retrains ML models using training data generated based on derived data that was stored in the derived data database 5850 during one or more missions. The derived data used for training data can be generated during operation of a helmet system during real world or simulated conditions. In a particular example, during a post-mission training process an operator retrieves derived data corresponding to a particular event from the derived data database 5850 and labels the derived data to reflect the event, thereby generating labeled derived data corresponding to the event. The analysis module 5900 then trains or retrains a ML model using the labeled derived data. In an embodiment, derived data generated by each of multiple helmet and non-helmet subsystems are used to generate training data for a particular ML model. For example, derived data from each of a vision subsystem, left and right ear cup systems, and a LWTS subsystem can be used to train a ML model to recognize threats.

External data database 5550 stores external data received by the helmet controller 1010 from one or more external network devices 1035. External data can include, for example, digital audio data (e.g. digital audio voice data received from an IP radio, legacy audio data converted to digital audio data, and audible alerts), data indicating locations of one or more objects of interest (e.g. locations of friendly or enemy forces and locations of waypoints), and digital video data (e.g., video footage from a drone-mounted camera or a camera mounted on another vehicle or on another soldier's helmet).

Augmented data module 5560 inputs external data and generates, based on the external data, augmented data for subsystems, i.e. referring to Figures 4 and 5, data that data combination module 4400 of a subsystem combines, at 6400, with processed field data generated by the pass through processing module 4200 for presentation on one or more subsystem output transducers comprising one or more subsystems. The helmet CPU 1015 communicates the augmented data to the one or more subsystems.

The augmented data module 5560 also inputs, from the analysis output database 5950, analysis output data and generates, based at least in part upon the analysis output data, augmented data. The helmet CPU 1015 communicates the augmented data to one or more subsystems.

The external systems notification module 5710 receives, from analysis output database 5950, ML model output data and/or algorithm output data, generates, based at least in part upon the output data, one or more notifications, and communicates the one or more notifications to one or more external network devices 1035. In some embodiments, external systems notification module 5710 retrieves derived data from the derived data database 5850, generates one or more notifications based at least in part upon the derived data, and communicates the one or more notifications to one or more external network devices. In a nonlimiting example, the external systems notification module retrieves derived data including a sample of digital sensory data, for example a segment of a video data stream, and communicates the sample of digital sensory data to an external network device.

Subsystem configuration module 5230 generates and updates configuration profiles for implementation by one or more subsystems. In an exemplary embodiment the configuration and settings database 5230 includes configuration settings and/or profiles corresponding to one or more subsystems, and in some embodiments multiple configuration profiles for each of the one or more subsystems. The configuration settings and/or profiles may be generated by, and communicated to, the configuration and settings database 5230, by one or more external network devices 1035. For example, some settings may be generated by a user, e.g. through interactions with an application on an EUD. Other settings and profiles may be generated by an external network device 1035 comprising a command controller or may be downloaded from an external network device 1035 that includes a data store that includes settings and profiles.

The subsystem configuration module 5230 selects, generates, and/or modifies a subsystem configuration profile corresponding to a particular subsystem and communicates the subsystem configuration profile to the subsystem. In some embodiments, the subsystem configuration module communicates multiple different subsystem configuration profiles to a particular subsystem, along with rules or triggers. The rules and triggers cause the subsystem to select and implement one of the multiple subsystem configuration profiles, or to switch between profiles, in response to detected or predicted events.

The subsystem configuration module 5570 can receive, from the analysis output database 5950, analysis output data (e.g., ML model output data including a detection or prediction) and, in response to the analysis output data, select, modify, or replace one or more subsystem configuration profiles for one or more subsystems. The subsystem configuration module communicates the one or more subsystem configuration profiles to the one or more subsystems.

### 6.3.16 Exemplary helmet CPU operation

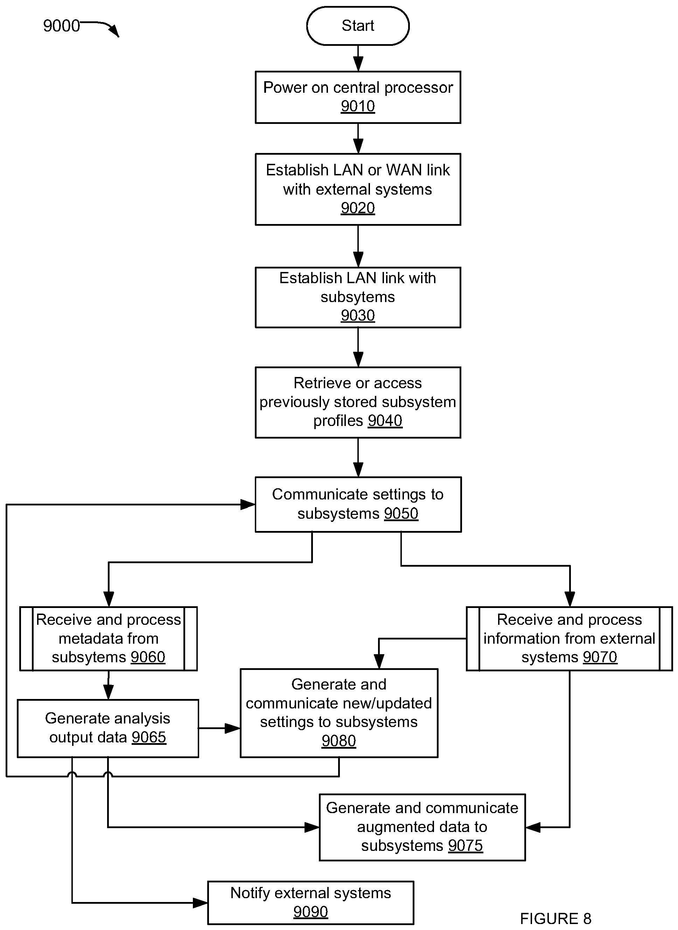

Figure 8 shows a flowchart that illustrates exemplary operation of the helmet CPU 1015. In steps 9010 through 9030 the helmet CPU 1015 is powered on and establishes or joins one or more network access points, e.g. a Local Area Network (LAN) access point, a Wireless Local Area Network (WLAN) access point, and/or a Wireless Wide Area Network WWAN network access point in steps 9020 and 9030. The helmet CPU establishes network connections with one or more external network devices 1035 in step 9020. For example, the helmet CPU can establish a WAN connection, via an IP radio, with a command controller. In an exemplary embodiment, the helmet CPU establishes a connection to an EUD and IP radio via a USB network.

At step 9030 the helmet CPU establishes LAN connections to one or more subsystems, e.g. with one or more of 1100, 1130, 1200, 1230, 1260, 1330, and 1360 and non-helmet subsystems 1500. In an exemplary embodiment, the helmet CPU establishes communication and power connections with one or more of the subsystems over a USB network. In some embodiments, the helmet CPU establishes communication connections with one or more of the subsystems over a Bluetooth or ISW network.

Once network connections are established, the helmet CPU operates to connect with a plurality of network devices hosted by or reachable over one of the LAN or the WLAN networks. The helmet CPU 1015 at least establishes a network communication channel with all of the subsystems of the helmet system 1000 over the LAN or the WLAN. The helmet CPU 1015 can further establish a network communication channel, over one of the LAN or the WLAN, with additional network devices that are not mounted to the helmet shell 1005, such as one or more non-helmet subsystems 1500 and other network devices that are worn by or carried by the user of the helmet system 1000. The helmet CPU 1015 can further establish a network communication channel with network devices that are worn by other users that are proximate to the helmet CPU 1015, e.g., to establish a network communication channel with a helmet CPU of another nearby helmet system worn by another user over the WLAN or over the WWAN. The helmet CPU 1015 can further establish a network communication channel with additional network devices 1035 that are external to the helmet system 1000 such as to establish network communication channels between the helmet CPU 1015 and network devices associated with vehicles, air or water crafts, and or with locally available electronic equipment, e.g. with computers, transducers and sensors, tools, communications devices, weapons systems, hand held electronic devices, security systems, or the like.

At step 9040, the helmet CPU retrieves one or more subsystem configuration profiles; for example, from configuration and settings database 5230. At step 9050, the helmet CPU communicates settings, including the one or more subsystem configuration profiles, to one or more helmet and non-helmet subsystems.

At step 9060, the helmet CPU iterates receiving and processing of information, including derived data from one or more subsystems. Processing of the derived data by the helmet CPU includes saving derived data for later use; for example, in derived data database 5850. A non-limiting example of later use includes post-mission training or retraining of one or more ML models. The helmet CPU can also process derived data to apply it to one or more ML models and or algorithms, which generate analysis output data 9065 based on the derived data. The analysis output data can include, for example, detections or prediction of an event.

At step 9070, the helmet CPU iterates receiving, storing, and processing of information, i.e. external data, from one or more external network devices 1035. For example, the helmet CPU can receive external data from one or more external network devices and save the external data to external data database 5550.

At step 9075 the augmented data module 5560 generates, based on the external data, augmented data and communicates the augmented data to one or more subsystems. The augmented data can include, for example, an audio feed from an IP radio or a video feed from a drone. In an illustrative exemplary embodiment, the augmented data module retrieves external data that include the geographic location of an enemy unit. The augmented data module processes the external data to generate augmented data corresponding to the location; for example, digital video data comprising a visual location marker to be overlaid on the screen of a display device. In another illustrative example, the augmented data module 5560 retrieves analysis output data that includes ML model output data comprising the location of a detected event or object relative to the helmet system, e.g., a predicted location of a source of gunfire or a predicted location of an enemy unit, and generates augmented data corresponding to the location; for example, augmented digital video data indicating a marker at the location or an arrow indicating the direction of the location relative to a the helmet system. The helmet CPU communicates the augmented digital video data to a vision subsystem 1130 comprising a vision module subsystem processor 1135, which combines the marker or arrow with processed field data to generate data for display on an output transducer, for example on a screen of a HUD device 1080 and/or 1085 comprising the vision module subsystem.

At step 9080, the subsystems configuration module 5570 determines new or altered configuration settings for one or more subsystems, generates or updates one or more subsystem configuration profiles, and communicates the one or more updated subsystem configuration profiles to the one or more subsystems.

In an exemplary embodiment, the subsystem configuration module determines the new or altered configuration settings based on information received from an external network device. In an illustrative exemplary embodiment, the subsystem configuration module 5570 retrieves, from configuration and settings database 5230, information received from an external network device; for example, received from a command controller that includes updated events or triggers for one or more systems to detect. For example, the updated events and triggers can include a particular license plate for detection by a vision subsystem or a particular phrase, name, or other audible information for an audio system to detect. The subsystem configuration module updates configuration profiles for one or more subsystems to include the updated events and triggers and communicates the updated configuration profiles to the one or more subsystems.

At step 9090, the external system notification module 5710 notifies one or more external network devices 1035 of one or more events or triggers detected or predicted by analysis module 5900 and/or communicates, to the one or more external network devices, derived data received by the helmet CPU from one or more subsystems.

### 6.3.17 Exemplary analysis processing

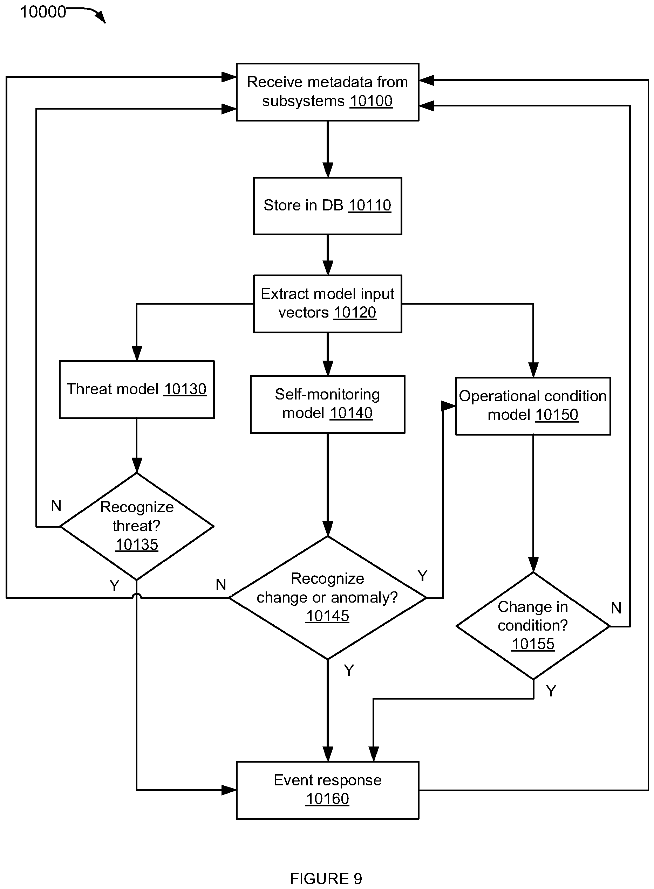

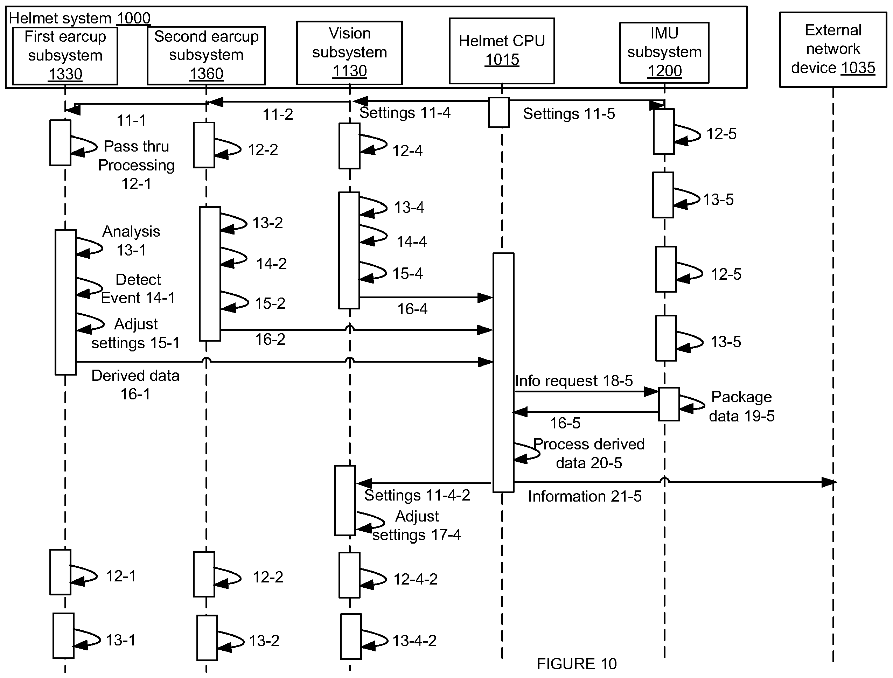

Figure 9 includes a flow chart that depicts exemplary analysis processing 10000 performed by an exemplary helmet CPU 1025. Referring now to Figures 9 and 10, analysis processing 10000 includes details of step 9060 of process 9000.

Referring once again to Figure 10, a helmet CPU receives derived data from one or more subsystems at step 10100 and stores the derived data in a database; for example, derived data database 5850, at step 10110. At step 10120, data preparation module 5860 extracts, from the derived data, input data for one or more ML models 5910 and/or algorithms 5920 instantiated on analysis module 5900. In an exemplary embodiment, the derived data includes ML model input data (e.g., input vectors or features generated and formatted for use as input data for one or more ML models by one or more subsystem processors). In this embodiment, the data preparation module selects input data for a particular ML model and does not perform further processing on the derived data. In other exemplary embodiments, the data preparation module may perform one or more analysis and or formatting operations on derived data to generate ML model input data.

The analysis processing method 10000 depicts an exemplary embodiment in which three separate ML models (a threat model 10130, self-monitoring model 10140, and operational condition model 10150) are instantiated and running on analysis module 5900. In other embodiments the analysis module can run more or fewer models and can run one or more different models and/or algorithms.

At step 10130, the analysis module 5900 receives input vectors from data preparation module 5860 and runs the input vectors against a threat model. The threat model is an AI or ML model that has been trained on derived data provided by one or more subsystems; for example, trained on audio derived data from ear cup subsystems 1330 and 1360, visual derived data from vision subsystem 1130, and laser threat derived data from LTWS subsystem 1230.

The threat model generates output data that includes a prediction of a threat; for example, a prediction that an attack is imminent. In an illustrative example, the threat model operates against input data that includes derived data comprising environmental sounds or audio environment classifications generated by one or more ear cup subsystems, derived data that includes classification of people and numbers of people generated by a vision subsystem, and derived data that includes detection of unknown laser illumination from a LWTS subsystem. The threat model generates, based at least upon the input data, a prediction that an attack is imminent. For example, the threat model may predict that an attack is imminent if one or more conditions are present in the derived data; for example, if a detected number of civilians present is less than typical, the sound of multiple vehicle engines is detected, and sounds attributable to wildlife are detected.

If the threat model predicts a threat, the helmet CPU may undertake one or more event response actions at step 10160. The event response actions include, for example, generating, with the augmented data module 5560, augmented data that includes a visual warning to be displayed on a vision subsystem HUD device and/or an audio warning to be played on an ear cup subsystem speaker. The event response actions may include subsystem configuration module 5570 selecting, generating, or updating one or more subsystem configuration profiles and providing the subsystem configuration profiles to one or more subsystems.

In a non-limiting illustrative example, the threat model recognizes and predicts an imminent attack at step 10135, generates analysis output data that includes the prediction, and communicates the analysis output data to the analysis output database 5950. At step 10160, the external systems notification module 5710 retrieves, from analysis output database 5950, the analysis output data that includes prediction of an imminent attack. The external systems notification module generates a notification that includes the prediction and, in some embodiments, related information such as a predicted time of the attack and a predicted direction from which the attack may come. The external systems notification module communicates the notification to an external system; for example, to an IP radio for communication to other helmet systems and or to a command center.

At step 10140, analysis module 5900 receives input data, e.g. ML model input vectors, from data preparation module 5860 and runs the input data against a self-monitoring model. The self-monitoring model is an AI or ML model that has been trained on derived data provided by one or more subsystems, for example trained on biometric derived data, e.g., heart rate and respiration rate data, provided by one or more sensors comprising biometrics subsystem 1260. The self-monitoring model recognizes a change or anomaly in the biometric data 10145 and generates output data that includes a prediction of a state of a user of a helmet system.

At step 10150, the analysis module 5900 receives input vectors from data preparation module 5860 and runs the input vectors against an operational condition model. The operational condition model is an AI or ML model that has been trained on derived data provided by one or more subsystems, for example trained on IMU derived data provided by an IMU subsystem 1200, visual derived data from vision subsystem 1130, and audio data from one or more ear cup subsystems 1330, 1360.

In some embodiments, the operational condition model 10150 processes input data that includes a physical condition of a soldier generated by the self-monitoring model at step 10140, for example an elevated or reduced heart or respiration rate 10145. The operational condition model generates output data that includes a prediction of an operational condition of a user of the helmet system; for example, a prediction that the user is on foot patrol, riding in a particular type of vehicle, not moving, and or in a particular pose, e.g., standing, sitting, or lying down.

If, at step 10155, the operational condition model generates output data that includes a change in operational condition of the user, the helmet CPU may undertake one or more event response actions at 10160. Exemplary event response reactions include one or more changes in configuration settings of one or more subsystems. For example, if the operational condition model predicts that a soldier is walking on a foot patrol, the helmet CPU may configure an audio subsystem to filter out sounds that can be expected to occur when multiple people are walking in proximity to each other, such as twig snapping sounds. In contrast, if the operational condition model predicts that the soldier is lying prone and not moving (e.g., as in the case of a sniper waiting in position) the helmet CPU may configure one or more audio subsystems to alert the soldier to sounds such as twigs snapping.

In another non-limiting exemplary embodiment, the subsystem configuration module 5570 retrieves, from analysis output database 5950, ML model output data that includes a prediction that a user of a helmet system is walking with multiple other soldiers; for example, while on patrol. In response, the subsystem configuration module selects, and provides to one or more subsystems, subsystem configuration profiles that correspond to walking on patrol. The subsystem configuration module subsequently receives ML model output data that includes a prediction that an attack is imminent. In response, the subsystem configuration model selects, and communicates to one or more subsystems, one or more subsystem configuration profiles that correspond to an attack.

Although three models are illustrated in Figure 10, analysis module 5900 can operate more or fewer AI or ML models. For example, in some exemplary embodiments the analysis module runs a system configuration AI that determines changes to one or more subsystem configurations in response to derived data provided by one or more subsystems or in response to output (e.g., detected or predicted events) generated by one or more other AI or ML models operated by the analysis module.

In some embodiments, the analysis module runs one or more specialty AI models, each of which may be triggered based on an operational condition predicted by the operational condition model at step 10155. An exemplary specialty AI is a shooting performance AI that is triggered based on the operational condition model predicting that a fire fight is occurring. The shooting performance AI model is run against inputs that include soldier biometric derived data, for example, breathing and heart rate, and produces output that includes alerts for the soldier to control breathing and calm down.

### 6.3.18 Exemplary system information flow

Figure 10 depicts exemplary information flow between a helmet CPU and multiple subsystems as well as processing carried out by the helmet CPU and by the subsystems. Helmet CPU 1015 is in communication with first ear cup subsystem 1330, second ear cup subsystem 1360, vision subsystem 1130, and IMU subsystem 1200. The helmet CPU is also in communication with one or more external network devices 1035.

The helmet CPU communicates settings to each of the subsystems at 11-1 through 11-5. In an exemplary embodiment, the helmet CPU communicates a configuration profile to each of the subsystems.

First ear cup subsystem 1330 iterates pass through processing 12-1 to generate, based on field data received from one or more in-situ sensors (e.g. from one or more microphones) of the first ear cup subsystem, processed data for presentation on one or more output transducers (e.g. one or more speakers) of the first ear cup subsystem. The other subsystems similarly iterate pass through processing at 12-2, 12-4, and 12-5.

The first ear cup subsystem iterates analysis processing at 13-1; for example, by operating a trained ML model to recognize or predict events based on processed field data. The other subsystems iterate analysis processing at 13-2, 13-4, and 13-5.

While performing analysis processing, the first ear cup subsystem 1330 detects an event at 14-1. The first ear cup subsystem may optionally autonomously adjust one or more operational parameters in response to the detected event at 15-1. For example, if the detected event includes a loud noise such as a gunshot or explosion, the first ear cup subsystem may adjust pass-through filtering levels to reduce a volume of sound presented on one or more speakers of the first ear cup subsystem. The second ear cup subsystem 1360 detects an event at 14-2 and optionally adjusts one or more operational parameters at 15-2. The vision subsystem 1130 detects an event at 14-4, and optionally adjusts one or more operational parameters at 15-4. In an exemplary embodiment, the vision subsystem detects an event that includes a bright flash of light, for example an explosion, and in response autonomously adjusts display settings to reduce a brightness level of images displayed on an output transducer, for example on a HUD device.

Each subsystem that detects or predicts an event generates derived data in response to the detected event and communicates the derived data to the helmet CPU. First ear cup subsystem 1330 communicates derived data to the helmet CPU at 16-1, second ear cup subsystem 1360 communicates derived data to the helmet CPU at 16-2, and vision subsystem 1130 communicates derived data to the helmet CPU at 16-4.

In an exemplary embodiment, in response to receiving derived data from one or more first subsystems, the helmet CPU requests additional derived data from one or more second subsystems. For example, the helmet CPU requests derived data from IMU subsystem 1200 at 18-5. In response to receiving the request, the IMU subsystem packages the requested derived data at step 19-5 (e.g., the IMU retrieves stored derived data from memory, formats it as one or more input vectors for a ML model running on the helmet CPU 1015, encodes the derived data in a message format, for example in a USB data format, and communicates a message including the derived data to the helmet CPU at 16-5.

The helmet CPU processes derived data received from the one or more subsystems at 20-5. Referring now to Figure 7, in a non-limiting example, the helmet CPU 1015 operates the analysis module 5900 to generate analysis output data and stores the analysis output data to analysis output database 5950. The subsystem configuration module 5570 retrieves analysis output data from the analysis output database and, based on the analysis output data, may determine new or updated configuration(s) for one or more subsystems.

Referring once again to Figure 10, the helmet CPU communicates updates configuration settings to vision system 1130 at 11-4-2, which, in response to receiving the updated configuration settings, updates one or more configuration settings of the vision subsystem at 17-4. The vision subsystem continues to iterate pass through processing at 12-4-2 and analysis processing at 13-4-2 using updated settings.

In some exemplary embodiments, the helmet CPU communicates information to one or more external network devices 1035 at 21-5. The information can include, for example, results generated by a threat model using derived data received from one or more subsystems, derived data received from one or more subsystems, or consolidated versions of derived data received from one or more subsystems.

In an exemplary implementation the helmet CPU 1015 executes one or more trained AI or ML models 5910 using derived data received by the helmet CPU from one or more subsystems as input vectors. In a particular exemplary implementation, vision subsystem 1130 detects multiple flashes of light indicative of gunfire at 14-4 based on digital video sensory data and communicates derived data comprising characteristics of the flashes of light to the helmet CPU at 16-4. The first and second ear cup subsystems each detect, based on digital sound sensory data, sounds indicative of gunfire at 14-1 and 14-2 respectively and communicate derived data corresponding to the sounds to the helmet CPU at 16-1 and 16-2. At 18-5, the helmet CPU requests, from IMU subsystem 1200, derived data comprising position vectors of the helmet system corresponding to time stamps of derived data received from one or more of the ear cup subsystems and vision subsystem. The IMU subsystem accesses a store of buffered data, generates and packages the requested position vectors at 19-5, and communicates derived data comprising the requested position vectors to the helmet CPU at 16-5. At 20-5, the helmet CPU runs an AI model comprising a threat model using, as input vectors, derived data received from the first ear cup processor subsystem 1330, second ear cup processor 1360, vision subsystem 1130, and IMU subsystem 1200.

In a first exemplary embodiment, the AI model generates analysis output that includes detection of a threat comprising gunfire. The AI model may generate additional analysis output that includes a probability metric associated with the detection. In a further exemplary embodiment, the analysis model generates one or more alternative detections, each of which may be associated with a probability metric. In an illustrative example, the AI model generates analysis output that includes gunfire detected with 96% confidence and firecrackers exploding detected with 4% confidence.

In a second exemplary embodiment, the first and second ear cup subsystems 1330 and 1360 each perform analysis, at 13-1 and 13-2, including generating a characterization of an audio environment surrounding the helmet subsystem. At 14-1 and 14-2 the ear cup subsystems detect that the audio environment has changed; for example, a new sound of multiple vehicle engines has been recognized or the sound of a flock birds taking flight has been recognized. At 16-1 and 16-2 the ear cup subsystems send, to the helmet CPU 1025, derived data that includes a characterization of an audio environment surrounding the helmet system.

Vision subsystem 1130, at 13-4, performs analysis processing that includes generating a count of a number of civilians visible to one or more input transducers of the vision subsystem. At 14-4, the vision subsystem detects that that the number of visible civilians has been reduced below a threshold number and, in response to the detection, at step 16-4 communicates derived data to the helmet CPU that includes the reduction in the number of visible civilians. At 20-5 the helmet CPU runs a ML model 5910 that includes a threat model against the derived data received from the ear cup subsystems and from the vision subsystem. The ML model generates analysis output that includes a prediction of an imminent attack. At 21-5 the helmet CPU may communicate information that includes the prediction of the imminent attack to one or more external network devices 1035; for example, to an IP or legacy radio and via the IP or legacy radio to other soldiers or a command controller.

### 6.3.19 Exemplary odometry subsytem

Known methods for positioning and rendering of augmented reality (AR) content on a visual display such as a screen of a heads up display worn by a user engender high power and computational demand. Exemplary AR content includes augmented data comprising maps, text, and/or icons and symbols that are graphically rendered and displayed on a viewing screen, in some cases in addition to processed field data. A first type of AR content is disconnected from a background scene and anchored to a display screen frame of reference, for example text that is located in a specific region of the screen regardless of context. A second type of AR content is connected to a scene and anchored to a user's point of view, for example directional arrows that point left or right of a current heading to indicate something of interest, for example an enemy unit or other point of interest, is located in the direction indicated by an arrow. A third type of AR content is world-referential, for example tags or icons overlaid on actual locations of world landmarks, for example a waypoint icon hovering over a building. Proper timing and placement of display of AR content is difficult to achieve. It requires precise information on position of the user relative to their environment over time. AR content displayed on a screen needs to be optimized for format and content so that the system and user are not overloaded.

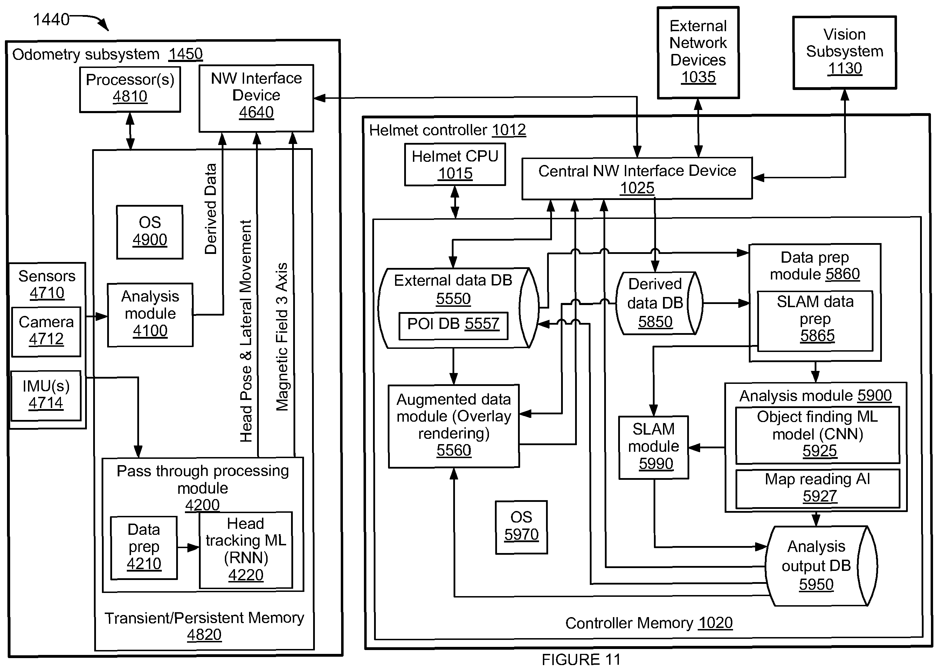

Referring to Figure 11, a schematic representation of an exemplary odometry system 1440 according to the technology described herein is shown. The system uses visual odometry fused with IMU data for head tracking and simultaneous location and mapping (SLAM) for position tracking and to calibrate the head tracking. Referring now to Figures 1 and 11, the odometry system 1440 is part of a helmet system 1000 and includes at least an odometry subsystem 1450, a helmet controller 1012, and a vision subsystem 1130. The helmet system comprising the odometry system 1440 can further include any one or more of the subsystems and non-helmet subsytems shown in Figure 1. The odometry system 1440 is in communication with one or more external network devices 1035 including, for example, an EUD operating an ATAK application.

In an example use case, the odometry system 1440 operates to render, on one or more HUD screens, information received by a helmet system 1000 from an Android Tactical Assault Kit (ATAK) application operating on an external network device 1035 comprising an end user device (EUD). Examples of data received from the ATAK application and rendered as AR content include: information integrated by the ATAK application across a military unit, for example targets recognized by helmet systems worn by one or more first members of the unit, shared with one or more, different, second members of the unit, and rendered as one or more AR symbols; map data rendered as a 3D map AR display using ATAK elevation data and including, for example, one or more of planned routes, points of interest (POIs), and potential risk areas; a linear or circular compass with directional arrows rendered as AR content to track enemy forces or other points of interest (POIs); and text chat messages communicated via the ATAK application rendered as text.

Referring now to Figures 4 and 11, the odometry subsystem 1450 includes components of subsystem 4000, although some components have been omitted from the odometry subsystem shown in Figure 11 for clarity. The odometry subsystem 1450 includes sensors 4710 which include at least one camera sensor 4712 and one or more IMUs 4710. The pass through processing module 4200 of the odometry subsystem 1450 includes a data preparation module 4210 and a trained head tracking machine learning (ML) model 4220. The odometry subsystem is a specialized subsystem that does not include output transducers 4710. Instead, processed field data generated by the pass through processing module is communicated to the helmet controller 1010 along with derived data generated by the analysis module 4100. In some embodiments, the odometry subsystem 1450 communicates, to a video display transducer of a vision system 1130, image field data generated by the one or more camera sensors 4712 or processed image field data generated therefrom. The image field data can include video and/or still image data. In an example embodiment, the odometry subsystem communicates the image field data or processed image field data to the vision subsystem via the helmet controller 1012.

Preferably, the one or more camera sensors 4712 provide at least 60 Hz output and can include a relatively low-resolution high-speed image sensor. An example of a suitable camera sensor is the ARX3A0 image sensor provided by Onsemi of Phoenix, AZ, which uses a CMOS, ultra-low-power, 560 by 560-pixel image sensor operating at 360 frames per second. The faster camera frame rate of this sensor reduces refresh latency. The camera sensor generates full Mobile Industry Processor Interface (MIPI) formatted image field data.

The IMU(s) 4714 include one or more IMU sensor modules. Each IMU sensor module includes one or more gyroscopes, one or more accelerometers, and may optionally include one or more magnetometers. A particular exemplary IMU 4714 includes 3 degree of freedom gyroscopes, 3 degree of freedom linear accelerometers, and at least one magnetometer. Exemplary IMU(s) 4714 generate gyroscope measurement field data (e.g. roll, pitch, yaw), inertial measurement field data (e.g. force or acceleration in 3 axes), and magnetometer field data (e.g. measurements of Earth's magnetic field). In a particular embodiment, the IMU(s) 4714 include two or more skewed redundant IMUs comprising multiple IMU sensors positioned skewed relative to each other at various locations on a helmet.

Referring now to Figures 7 and 11, the helmet controller 1012 includes components of helmet controller 1010 illustrated in Figure 7, although some components have been omitted from helmet controller 1012 illustrated in Figure 11 for clarity. Referring once again to Figure 11, the data preparation module 5860 includes a SLAM data preparation module 5865, the analysis module 5900 includes a trained object finding (e.g. POI finding) ML model 5925, and the external data database 5550 includes a POI database 5557.

In operation, the odometry subsystem 1450 fuses field data from one or more IMUs with image field data from one or more cameras to generate head tracking data including head pose and lateral movement of a user's head. The odometry subsystem 1450 operates more efficiently than known Bayesian filters and fusion algorithms that operate on field IMU data. Further, the odometry subsystem uses image field data from the one or more cameras to correct for errors in field data from the one or more IMUs, thereby generating improved head tracking data as compared to known methods and enabling improved timing and placement of AR content. The helmet controller 1012 merges head tracking data generated by the odometry subsytem 1450 with other information provided by one or more external network devices 1035 and, is some embodiments, one or more other subsystems, to determine parameters for overlay rendering of AR content, e.g. to determine how AR icons should be displayed on a viewing screen, for example on a screen of a heads up display (HUD) device.

Image field data generated by the one or more camera sensors 4712 are passed to the analysis module 4100 which performs triggering event detection based on the image field data as previously described. Exemplary triggers comprising trigger event detection include specific visual targets, points of interest, gunshots, and explosions. Exemplary visual targets include targets that are handed off from one or more vision subsystems, e.g. from vision subsystem 1130, and from one or more additional helmet systems 1000 and/or external network devices 1035 (e.g. a higher level computing system associated with a squad leader or base). The analysis module also analyzes the image field data to recognize landscape and urban features. The analysis module generates derived data that includes, for example, one or more of identification of a detected triggering event, metadata associated with the triggering event such as time, location, and apparent view angle, and full frame camera images and communicates the derived data to the helmet controller 1012.

The pass-through processing module 4200 performs low power vision-based head tracking and mapping for positioning AR overlays on HUDs using image field data and IMU field data. The data preparation module 4210 prepares field data generated by the one or more IMUs 4714 and image field data from the one or more cameras 4712 for use as input of the head tracking ML model 4222. At least a portion of the IMU field data, for example data generated by or data based on data generated by one or more gyroscopes and data generated by one or more accelerometers, are processed by the data preparation module 4210 to produce input data for the head tracking ML model. The image field data is provided to the pass through processing module 4210 where it is processed by the data preparation module to generate, based on the image field data, image input data suitable for the head tracking ML model 4220. The data preparation module may degrade and/or distort the image field data to generate input data for the head tracking ML model, for example by reducing bit depth of an image frame (e.g. by converting the image to monochrome), by reducing an image resolution (e.g. by down-sampling and/or cropping an image), or a combination of the above.

The head tracking ML model 4220 uses visual odometry with optical flow and IMU data to track head movement. Optical flow tracks head motion in six degrees of freedom using input data generated by the data preparation module 4210 based on image field data and removed noise that is inherent in IMU data. An exemplary head tracking ML model 4220 includes a recurrent neural network (RNN) that has previously been trained on head tracking training data. Exemplary head tracking training data is generated, for example, based on recorded head movements of a mannequin head mounted on a robotic arm. The robotic arm is configured with position sensors and motion of the mannequin head is viewed by a motion capture system (while fine tuning the algorithm). Additional example head tracking training data includes datasets generated using participants in a controlled environment equipped with a full space motion capture system. Further additional example head tracking training data includes information recorded during one or more real life operations.

The head tracking ML model 4220 fuses input data generated based on data from one or more IMU sensors 4714, degraded/distorted image data from one or more camera sensors 4712, and dynamic coefficients of video generated by the one or more camera sensors to generate head tracking processed field data including head pose and lateral movement. The pass through processing module 4200 can fall back to producing head tracking processed field data using only IMU sensor field data if image field data is not available or is not reliable, for example if a camera view has lost reference points, if a camera is wet, or if camera imaging is degraded, for example by fog, smoke, or blowing sand. The pass through processing module 4200 can generate head tracking data based on IMU field data using a trained ML model or a traditional fusion algorithm. Head tracking data generated by the head tracking ML model 4220 with input data including image field data is more accurate and is less prone to drift than head tracking data generated using traditional fusion algorithms such as Bayesian fusion algorithms and Kalman filters.

The pass through processing module 4200 outputs processed field data including head pose/relative head tracking vector per frame and lateral movement/relative lateral movements per frame. The processed field data can also include magnetic field data generated by one or more IMU magnetometers. The processed field data is communicated from the odometry subsystem 1450 to the helmet controller 1012.

The helmet system 1012 receives, from the odometry subsystem 1450, head tracking data, including head pose and lateral movement, as well as magnetometer data. When the analysis module 4100 detects a triggering event, the helmet controller also receives, from the odometry subsystem 1450, alerts and undegraded image field data, for example full MIPI video data.

The helmet system 1012 point of interest (POI) database 5557 is populated with POI data identifying a plurality of points of interest. The helmet system receives POI data from one or more external network devices 1035, for example from an EUD and, in example embodiments, more specifically from an ATAK application running on the EUD. In addition, in some exemplary embodiments, one or more trained map reading AI models 5927 operated by the analysis module 5900 operate on map data, for example on map data provided by the ATAK application, to identify map-based POIs based on the map data. The map-based POIs are used by the helmet CPU 1015 to populate the POI database 5557 with locations and possible viewing ranges of key map items, i.e. by loading POI database with fixed points of interest.

The object finding ML model 5925 includes a trained machine learning model, for example one or more recurrent neural network (CNN) models trained to perform object recognition and feature detection based on image field data received by the helmet processor 1012 from the odometry subsystem 1450. The object finding ML uses computer vision techniques to find objects in the world, with these objects both recognized by object recognition and verified with similarity detection to map the found objects to points of interest (POIs) identified in the POI database 5557. The object finding ML uses trigonometry/point cloud techniques to constantly align relative angles corresponding to objects comprising POIs to absolute angles. The object finding ML model 5925 finds, classifies, and verifies POIs based at least on the image field data. The POIs can include those selected by a user as well as POIs self-identified by the helmet CPU 1012. POIs include, for example, standard urban features high points like mountain tops, distinctive versions of a standard item (lamp posts), and targets identified by one or more users.

Outputs of the object finding ML model include, for each detected object, e.g. for each identified POI, identity of the detected object, type of detected item, and estimated accuracy of identification of the object as well as relative azimuth to the detected object and pitch to the detected object. The object finding ML model can generate output data formatted as one or more POI point clouds. The object finding ML saves object finding ML model output data to the analysis output database 5950 and may communicate the data to the SLAM module 5990, which uses the detected objects to perform simultaneous location and mapping.

A particular version of a trained object finding ML model 5925 corresponding to a particular mission can be loaded into the analysis module 5900 on a mission-by-mission basis. The object finding ML model 5925 can be retrained for each location a mission will take place. The helmet CPU 1015 can swap in and out a specific version of the object finding ML model 5925 depending on the stage of the mission. Prior to any operation, the object finding ML model 5925 is trained with the types of features/items prevalent in the area where the mission is to take place, as well as with pictures of high points and key infrastructure corresponding to the area. For example, a first trained version of the object finding ML model 5925 is loaded for SLAM in the mountains of Eastern Europe and a second trained version of the object finding ML model is loaded for 'counter-terror' operation in a US city.

The SLAM data preparation module 5865 arbitrates data to be used for SLAM. For example, the SLAM data preparation module coordinates data inputs including lateral movements provided by the odometry subsystem 1450, objects, for example a POI point cloud, provided by the trained object finding ML model 5925, magnetometer processed field data provided by the odometry subsystem 1450, and data provided by one or more additional inertial systems carried by a user (not shown). In some embodiments, the data inputs can include location data provided by an external network device 1035 that provides location data based on one or more of Global Navigation Satellite Systems (GNSS), location data derived from celestial information, and location data generated based on proximity sensing. The SLAM data preparation module 5865 excludes erroneous data that does not fit with a consensus.

The SLAM module 5990 performs simultaneous location and mapping (SLAM) based on input data, previously discussed, that is arbitrated by the SLAM data preparation module 5865. The SLAM module generates SLAM output data that includes a location of the helmet controller 1012, a map of the environment local to the helmet controller, and a point cloud of recognized features. The SLAM output data is used to calibrate the head tracking ML model 4220 operated by the odometry subsystem 1450. The SLAM data is provided to one or more external network devices 1035, for example to an EUD running an ATAK application. The ATAK application can share the SLAM data with one or more other helmet systems 1000 and/or external network devices 1035. The SLAM module can include one or more trained SLAM models, each of which is specific for specific mission conditions. For example a particular SLAM model may be trained for performing SLAM in a particular location corresponding to a particular mission.

The augmented data module 5560 performs AR overlay rendering. Inputs include head pose and external data, e.g. data received for display on a HUD screen, for example on a HUD screen of the vision subsystem 1130. External data may include one or more points of interest, one or more alerts, and one or more locations of triggering events such as gunshots and explosions. Outputs include augmented data comprising the external data formatted for display one the HUD screen, including AR icons and their location on the HUD screen. Non-limiting example AR icons include point of interest markers, enemy force indicators, directional indicators (e.g. compass/GPS mapped to screen, etc.).

The visual subsystem 1130 operates as previously described, including displaying processed image field data on one or more HUD screens. The visual subsystem 1130 receives, from the helmet controller 1012, augmented data that includes instructions for overlay of AR objects and information for inclusion in an AR overlay. The visual subsystem combines the augmented data with processed image field data to generate augmented field data including one or more AR objects overlaid on processed image field data for display on one or more HUD screens.

### 6.3.20 Exemplary multi-modal modular sensor pod

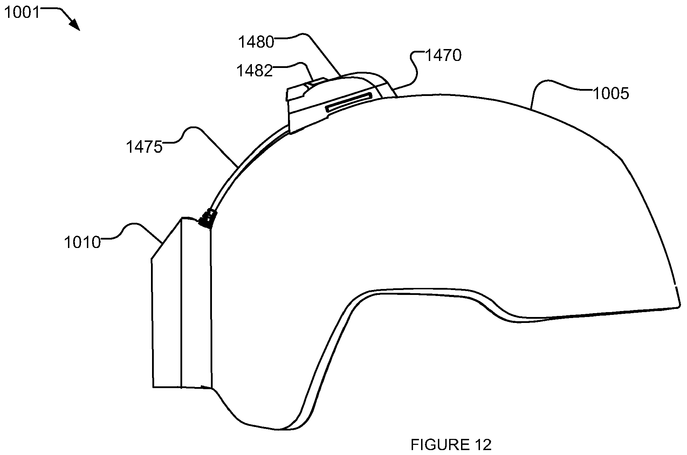

Figure 12 shows a schematic representation of a helmet system 1001 worn on the head of a user. The helmet system 1001 includes a helmet shell 1005 configured to protect the user wearing the helmet system from a head injury; for example by blunt trauma, ballistic impact, or both. The helmet system 1001 includes a helmet controller 1010. The helmet controller 1010 is attached the helmet shell 1005 on an outside surface of the helmet shell. In a non-limiting exemplary embodiment, the helmet controller 1010 is attachable to or removable from a rear external surface of the helmet shell.

The helmet system include a sensor pod 1480. The sensor pod is removably attached to a sensor pod interface 1470 which, in turn, is attached to the helmet shell 1005. The sensor pod interface 1470 may be fixedly or removably attached to the helmet shell 1005. The sensor pod interface is connected to the helmet controller 1010 by a sensor pod cable 1475. The sensor pod cable is configured to provide power and data communications between the helmet controller and the sensor pod interface. The sensor pod interface 1470 is configured to provide an electro-mechanical interface for power and data communication between the sensor pod interface 1470 and the sensor pod 1480. The electro-mechanical interface is configured to enable removable mechanical attachment of the sensor pod to the sensor pod interface.

A sensor pod 1480 may be attached to the sensor pod interface 1480 and subsequently detached from the sensor pod interface. The same or a different sensor pod may then be removably attached to the sensor pod interface. In this manner, a first sensor pod 1480 is hot swappable with a second, and differently configured, sensor pod 1480.

In example embodiments, and referring now to Figures 4 and 12, a sensor pod 1480 is configured as a subsystem 4000. As such, the sensor pod 1480 may include one or more sensors 4710, one or more output transducers 4720, a subsystem processor 4810, and a subsystem memory 4820.

In a particular exemplary embodiment, the sensor pod 1480 is a modular, multi-sensor pod that includes multiple sensors 4710 and a single processor 4810 housed in a standardized enclosure 1482. Sensors 4710 of an example multi-sensor pod include a laser threat warning sensor (LTWS) and one or more acoustic shockwave sensors, for example an array of three acoustic sensors. The LTWS operates as previously described. The one or more acoustic shockwave sensors each generate field data corresponding to a sensed acoustic shock wave, for example a shock wave generated by a bullet traveling in the vicinity of the helmet system 1001. Output transducers 4720 of the example multi-sensor pod includes one or more infrared (IR) and visible light (VIS) strobe transducers. The strobe transducers generate IR and/or visible light, optionally in a coded strobe pattern to enable, for example, identification of friendly units. IR and/or VIS illumination and coded strobe pattern may be programmable by a user, enabled in response to detected threat, or enabled in response to other detected condition, e.g. below a specified altitude).

An analysis module 4100 of the sensor pod 1480 receives field data from the LTWS and from the one or more acoustic shockwave sensors. Upon detecting and identifying a threat, the analysis module generates, based on the LTWS field data, derived data that includes characteristics of, and metadata corresponding to, a detected laser threat, for example a targeting laser illuminating the LTWS. The characteristics and metadata include one or more characteristics of detected laser illumination, for example, wavelength, intensity, pulse width, and any codes embodied by the laser illumination as well as time of detection and direction of arrival of the laser illumination. The analysis module generates, based on a blast wave detected by one or more of the acoustic shockwave sensors, derived data including time of arrival, direction of arrival, maximum amplitude, rise time of initial peek and rate of change, reflection time to second peek, and any corresponding shock/blast waves.

The sensor pod 1480 communicates derived data describing a detected threat to the helmet controller 1010. The helmet CPU adds head position values to the derived data. Referring now to Figure 11, the head position values may be generated by an odometry subsystem 1450 and communicated to the helmet controller 1010, thereby generating detected threat and head position data.

Additional or alternative multi-sensor pods include different sensors. For example, an alternative multi-sensor pod includes sensors configured to detect microwave or other radiofrequency energy and to determine characteristics thereof.

### 6.3.21 Exemplary target tracking and handoff

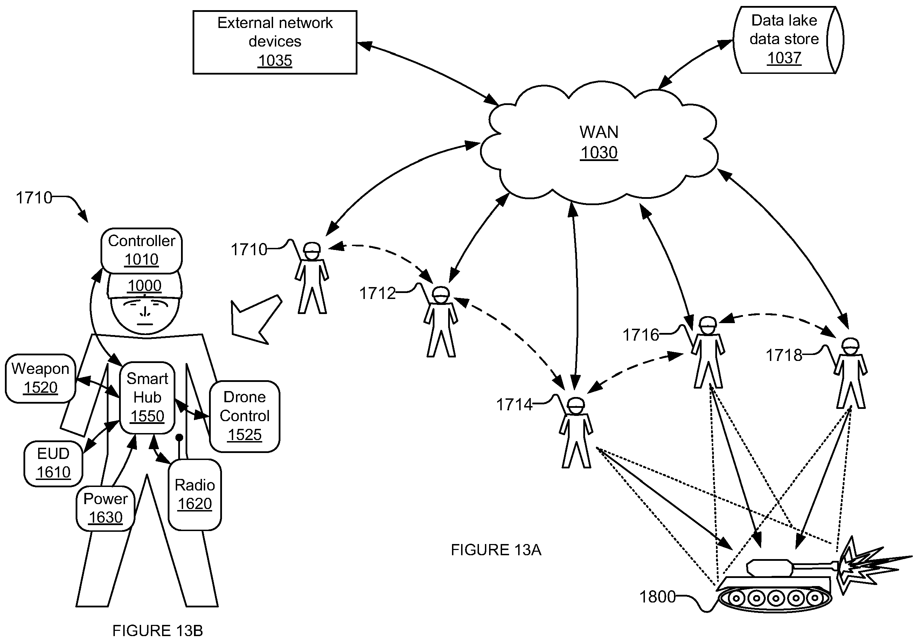

Figure 13A shows a schematic representation including information sharing among helmet systems 1000 worn by multiple soldiers and between helmet systems and between the multiple helmet systems and one or more external network devices 1035. Communications between helmet systems 1000 are illustrated by dashed double-headed arrows while communications between helmet systems 1000 and one or more external network devices 1035, including a data lake data store 1037, over a WAN 1030 are illustrated by solid double arrows.

Multiple soldiers 1710, 1720, 1714, 1716, and 1716 are each outfitted with at least a helmet system 1000 including a helmet controller 1010, as illustrated in reference to solider 1710 in Figure 13B. Referring now to figures 1, 12, 13A, and 13B, each helmet system 1000 may include an odometry subsystem 1450, a multi-sensor pod 1480, and one or more additional subsytems, e.g. one or more of subsystems 1100, 1130, 1200, 1230, 1260, 1330, and 1360, as well as a helmet controller 1010.

Soldier 1710 includes multiple soldier-carried electronic devices including a torso-worn hub 1550, for example a smart hub comprising a processor and a data routing hub, in communication with the helmet controller 1010 over a LAN or PAN. Two non-helmet subsystems, a weapon non-helmet subsystem 1520 and a drone control non-helmet subsystem 1525 are each in communication with the smart hub 1550 and with the helmet controller, via the smart hub over the LAN or PAN. An EUD 1610 and radio 1620, for example an IP radio, are also in communication with the smart hub 1550. A power source 1630, for example a non-rechargeable battery, rechargeable battery, smart battery, or fuel cell, provides power to the smart hub and may open a communication session with the smart hub. The smart hub 1550 can route power from the power source 1630 to one or more of the EUD, radio, non-helmet subsystems, and helmet system. Each other soldier 1712, 1714, 1716, and 1718 may include one or more of the aforementioned soldier-carried electronic devices.

In an example operating mode, when a threat is detected and identified by a subsystem, for example by a multi-sensor pod 1480, the subsystem communicates, to a helmet controller 1010, derived data that includes characteristics of the threat. The helmet controller adds head position values to the derived data and communicates the derived data to one or more other helmet controllers, for example to helmet controllers of each soldier in a unit. The one or more other helmet controllers each compare native derived data, i.e. derived data generated by a local subsystem, and received derived data to match similar events and to generate an estimated triangulated location of a threat associated with the derived data.

If three or more helmet controllers, e.g. helmet controllers associated with each soldier 1714, 1716, and 1718, identify a matching triggering event, e.g. a blast generated by a tank 1800, a triangulation location associated with the event, e.g. a location of the tank 1800, can be generated and published to an ATAK application running on an EUD 1610 for publication and sharing with other helmet controllers, for example with helmet controllers associated with soldiers 1710 and 1712. The triangulation associated with the event can be generated by one or more helmet controllers or by an external network device 1035, for example by an external network device that pulls pooled derived data from multiple helmet systems from the data lake data store 1037.

Multiple helmet systems 1000, for example helmet systems worn by soldiers 1710, 1712, 1714, 1716, and 1718 can each communicate derived data related to one or more detected events to a military cloud, for example to a data lake data store 1037, over a WAN 1030. One or more eternal network devices 1035, for example a base or command computing system, can access the derived data uploaded by multiple systems to the data lake data store and combine the derived data, in some cases with data from one or more additional sources, to generate a more robust understanding of the one or more detected events. For example, an external network device 1035 comprising a base or command computing system can consolidate derived data corresponding to a location of the tank 1800 communicated to the data lake data store 1037 by separate helmet systems 1000 worn by each of soldiers 1714, 1716, and 1718 to determine a triangulated location of the tank.

A non-limiting example of information propagation between and among helmet systems 1000 and external network devices 1035 includes: derived data, for example a target identification and location, is generated by a helmet subsystem 1000; the derived data is communicated to a helmet system of a squad leader, for example to a processor comprising a squad leader's torso hub 1550 and therefrom to the squad leader's helmet system; the squad leader helmet system or torso hub communicates the derived data to an external network device 1035, for example to a command or base processing system, and/or to a data lake data store 1037; and the derived data, alone or in combination with other data, is propagated to other soldier helmet systems 1000 and/or to one or more POI databases 5557.

The aforementioned sharing of derived information is advantageous in that lower level systems, i.e. helmet systems 1000 and their component subsystems, perform initial processing and analysis of collected field data, thereby producing derived data that is derived data is filtered before being sent to higher level systems. The derived data is formatted before being sent up to higher level systems; only low BW data is sent up; and higher level systems don't need to filter/cut/format the data (i.e. the lower level systems offload processing load from the higher level systems).

One or more of the soldiers and the external network device can communicate a triangulated location of a threat, for example a location of the tank 1800, to a centralize data store, for example the data lake data store 1037, wherefrom the location is propagated to a POI database, e.g. 5557, and/or POI point cloud, for example through ATAK applications running on one or more EUDs 1610. In this manner, targets and other points of interest, and more generally any information detected by individual helmet systems 1000 or groups of helmet systems, can be propagated to multiple other helmet systems and to external network devices 1035. This is advantageous in that a target observed by a fist helmet system 1000 that is not visible or detectable by a second helmet system can be handed off to the second helmet system, for example by propagating an identity, location, and observed characteristics of the target to the second helmet system via ATAK and a POI database. The second helmet system can then be configured to look for the target, for example by loading one or more trained ML models specific for detecting the target onto one or more subsystems. The second helmet system is thus configured to detect and track the target when it becomes observable by the second helmet system.

The base or command computing system can optionally request additional data corresponding to the location of the tank 1800 from a different external network device 1035 or from a different soldier. In a non-limiting example operation, the base or command computing system can task a drone/UAV reconnaissance platform to perform additional imaging or other reconnaissance tasks related to the tank, either by contacting another external network device 1035 that controls one or more drones or by communicating a configuration profile or request to one or more helmet systems 1000 that includes instructions for a drone control subsystem controller 1525 to task one or more drones to perform the reconnaissance. The base or command computing system subsequently receives location data corresponding to the tank from one or more drone/UAV platforms and uses the drone/UAV data to enhance a tank location determination.

### 6.3.22 Conclusion

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules, or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. It should be understood that the term "computer-readable storage media" refers to physical storage media, and not signals, carrier waves, or other transient media.

It will also be recognized by those skilled in the art that, while the subject technology has been described above in terms of preferred embodiments, it is not limited thereto. Various features and aspects of the above-described subject technology may be used individually or jointly. For example, each and every claim may be combined with any other claim in any combination.

The following features may also be the basis of one or more claims, in any combination, or added in whole or in parts to the pending claims. In accordance with the subject technology, a helmet system comprises a helmet shell, a plurality of subsystems attached to the helmet shell, and a controller. Each subsystem receives a different type of field data from at least one in-situ sensor and processes the field data to detect an associated event trigger. The controller may also be attached to the helmet shell for receiving data from the subsystems in response to detection of the associated event triggers. The controller provides a command to modify an operating mode of one or more of the subsystems in response to the data. The controller may provide augmented data to one or more of the subsystems in response to the data. The augmented data may be related to potential threats and presented to a user via the subsystems. Some of the subsystems can enable an output for a user in response to detection of the associated event trigger. Preferably, the subsystems include at least two of an audio subsystem, a vision subsystem, a laser threat warning subsystem, an inertia measurement subsystem and an ambient light subsystem.

Further, although the subject technology has been described in the context of its implementation in a particular environment, and for particular applications (e.g. within a military environment for detecting and characterizing military threats), those skilled in the art will recognize that its usefulness is not limited thereto and that the present technology can be beneficially utilized in any number of environments and implementations where it is desirable to compile, process, and distribute information related to one or more events or conditions of interest and to characterize the events or conditions of interest. Accordingly, the claims set forth below should be construed in view of the full breadth and spirit of the subject technology as disclosed herein.

## Claims

1. A helmet system comprising:
a helmet shell;
a subsystem, attached to the helmet shell, for receiving field data from at least one in-situ sensor and processing the field data to detect an event trigger; and
a controller, attached to the helmet shell, for receiving subsystem data from the subsystem in response to detection of the event trigger, wherein the controller provides a command to modify an operating mode of the subsystem in response to the subsystem data.

2. The helmet system of claim 1 wherein the controller provides augmented data to the subsystem in response to the subsystem data.

3. The helmet system of claim 2 wherein the augmented data is related to a potential threat and presented to a user via the subsystem.

4. The helmet system of any of claims 1 to 3 wherein the subsystem provides an output to a user in response to detection of the event trigger.

5. The helmet system of any of claims 1 to 4 further comprising a plurality of subsystems attached to the helmet shell, each of the subsystems processing a different type of field data and providing associated data to the controller in response to detection of an associated event trigger.

6. The helmet system of claim 5 wherein the controller provides commands to modify operating modes of one or more of the subsystems in response to the associated data.

7. The helmet system of claim 5 wherein the controller provides associated augmented data to one or more of the subsystems in response to the associated data.

8. The helmet system of claim 7 wherein the associated augmented data are related to potential threats and presented to a user via the subsystems.

9. The helmet system of claim 5 wherein each of the subsystems provide an output to a user in response to detection of the associated event trigger.

10. The helmet system of claim 5 wherein the subsystems include at least two of an audio subsystem, a vision subsystem, a laser threat warning subsystem, an inertia measurement subsystem and an ambient light subsystem.

11. A method for operating a helmet system comprising a plurality of subsystems and a controller, the method comprising:
receiving, by each of the subsystems, field data from at least one sensor in-situ with the subsystem;
processing, by each of the subsystems, the field data to detect an associated event trigger;
providing, by each of the subsystems, data to the controller in response to detection of the associated event trigger; and
providing, by the controller, augmented data to one or more of the subsystems in response to the data.

12. The method of claim 11 wherein the augmented data is related to a potential threat and presented to a user via the one or more subsystems.

13. The method of any of claims 11 and 12 wherein the controller sends commands to modify operating modes of one or more of the subsystems in response to the data.

14. The method of any of claims 11 to 13 wherein each of the subsystems processes a different type of field data and provides an output to a user in response to detection of the associated event trigger.

15. The method of any of claims 11 to 14 wherein the subsystems include at least two of an audio subsystem, a vision subsystem, a laser threat warning subsystem, an inertia measurement subsystem and an ambient light subsystem.
